# EUROPEAN PATENT APPLICATION

(11) **EP 3 007 044 A1**
(43) Date of publication of application: **13.04.2016**
(21) Application number: 15180065.3
(22) Date of filing: 06.08.2015
(51) Int. Cl.: G06F 3/041, G06F 3/044

(54) **TOUCH PANEL AND DISPLAY DEVICE HAVING THE SAME**

(30) Priority: 08.10.2014 KR 20140135532
(71) Applicant: Samsung Electronics Co., Ltd., Suwon-si, Gyeonggi-do (KR)
(72) Inventor: YANG, Dae Kuen, Suwon-si (KR)
(74) Representative: Taor, Simon Edward William

(57) **Abstract**

Provided is a touch panel including: a first pattern portion including: a first film portion; and a first electrode portion comprising a plurality of first electrodes provided on the first film portion and spaced apart from one another, a first electrode of the plurality of first electrodes being short-circuited; a second pattern portion including: a second film portion; and a second electrode portion comprising a plurality of second electrodes provided on the second film portion and spaced apart from one another, a second electrode of the plurality of second electrodes being short-circuited; and an insulating portion configured to insulate the first pattern portion and the second pattern portion from each other.

## Description

Apparatuses and methods consistent with exemplary embodiments relate to a touch panel for increasing a response speed, and a display device having the same. Article II.

Display devices are devices that display visual and three-dimensional image information, and include liquid crystal display (LCD) devices, electro-luminescence display (ELD) devices, field emission display (FED) devices, plasma display panels (hereinafter referred to as "PDPs"), thin film transistor-liquid crystal display (TFT-LCD) devices, flexible display devices, etc.

Such display devices have been used for various electronic devices such as televisions, monitors for computers, notebook computers, mobile terminals, display units of refrigerators, display units of cameras, etc. Such display devices interface with users via various input devices such as keyboards, mice, digitizers, touch panels, etc.

The touch panel among the above-identified various input devices is installed on a display surface of a display panel and forms a touchable display device (referred to as a touch screen), and is a device capable of receiving user's selection of desired information while a user watches an image displayed on the display surface. Further, the touch panel has advantages in that manipulation is easy, a probability of malfunction is small, input can be performed without using a separate input device, and it is possible for the user to manipulate rapidly and easily through content displayed on a screen.

The touch panel may have a resistive type of determining a touched position depending on a voltage gradient according to a resistance in a state in which metal electrodes is formed in an upper plate and a lower plate and a direct voltage is applied to the metal electrodes, a capacitive type of forming an equipotential in a conductive film and sensing a position in which voltage change between the upper plate and the lower plate occurs according to touch and sensing a touched position, an electromagnetic type of reading an LC value induced according to touch of a conductive film by an electronic pen and sensing the touched position, a surface acoustic wave (SAW) type, and an infrared type, etc., according to a method of sensing the touched position.

Among the different types of the touch panels discussed above, resistive touch panels have limitations of a lower permeability, a narrower area of an effective screen, and a narrower range of operating temperatures compared to other types of the touch panels, and have disadvantages in that the resistive touch panel is vulnerable to changes according to time.

Also, the touch panel of the capacitive type has disadvantages in that a signal delay is generated because resistance of a wire is increased as a size is increased, and the signal delay is also generated because the resistance is increased when widths and intervals of the wires are decreased in order to decrease a size of a bezel of the touch panel. Accordingly, a response speed is reduced, and defects may occur in an etching process of the wire when increasing the dimension of the wire in order to decrease the resistance.

Aspects of one or more exemplary embodiments provide a touch panel including a first pattern portion having a first electrode portion in which first electrodes are arranged on both surfaces of a first film portion and the first electrodes arranged at the same position are short-circuited and a second pattern portion having a second electrode portion having a second electrode portion in which second electrodes are arranged on both surfaces of a second film portion, and a display device having the same.

Aspects of one or more exemplary embodiments also provide a touch panel including a first film portion in which a plurality of first holes are formed, a first electrode portion arranged on both surfaces of the first film portion, a first pattern portion having a first short-circuited portion inserted in the plurality of first holes, a second film portion in which a plurality of second holes are formed, a second electrode portion arranged on both surfaces of the second film portion, and a second pattern portion having a second short-circuited portion inserted in the plurality of second holes, and a display device having the same.

In accordance with an aspect of an exemplary embodiment, there is provided a touch panel including: a first pattern portion including a first film portion, and a first electrode portion in which a first electrode which is short-circuited is arranged on the first film portion and a plurality of first electrodes are spaced apart from each other; a second pattern portion including a second film portion, and a second gap portion in which a second electrode which is short-circuited is arranged on the second film portion and a plurality of second electrodes are spaced apart from each other; and an insulating portion insulating the first pattern portion and the second pattern portion.

The plurality of first electrodes may include a first one surface electrode arranged to be spaced apart from each other on one surface of the first film portion, and a first back surface electrode arranged to be spaced apart from each other on a back surface of the first film portion, and the plurality of second electrodes include a second one surface electrode arranged to be spaced apart from each other on one surface of the second film portion, and a second back surface electrode arranged to be spaced apart from each other on a back surface of the second film portion.

The first pattern portion may further include a first connection portion connecting the first one surface electrode and the first back surface electrode arranged at positions facing each other, and the second pattern portion may further include a second connection portion connecting the second one surface electrode and the second back surface electrode arranged at positions facing each other.

The first film portion may include at least one first hole formed at an arrangement position of the first one surface electrode, the second film portion may include at least one second hole arranged at an arrangement position of the second one surface electrode, the first connection portion may be arranged in the at least one first hole, and the second connection portion may be arranged in the at least one second hole.

The first connection portion may be arranged on each of a first side and a second side of the first film portion and connect the first one surface electrode and the first back surface electrode which are arranged to face each other, and the second connection portion may be arranged on each of a first side and a second side of the second film portion and connect the second one surface electrode and the second back surface electrode which are arranged to face each other.

The first connection portion may connect a first extension portion extending from both ends of the first one surface electrode and a second extension portion extending from both ends of the first back surface electrode, and the second connection portion may connect a first extension portion extending from both ends of the second one surface electrode and a second extension portion extending from both ends of the second back surface electrode.

The touch panel may further include: a first wire portion connected to the first electrode portion and receiving an input of a signal; and a second wire portion connected to the second electrode portion and outputting a signal.

The insulating portion may include an adhesive material.

The plurality of first electrodes and the plurality of second electrodes may intersect each other.

The first film portion and the second film portion may include glass or plastic.

In accordance with an aspect of another exemplary embodiment, there is provided a touch panel including: a first pattern portion including a first film portion, a first electrode portion having a plurality of one surface electrodes arranged to be spaced apart from each other on one surface of the first film portion and a plurality of back surface electrodes arranged to be spaced apart from each other on a back surface of the first film portion, and a first connection portion connecting a plurality of one surface electrodes of the first electrode portion and a plurality of back surface electrodes of the first electrode portion, and connecting the first one surface electrodes and the first back surface electrodes arranged at position facing each other; a second pattern portion including a second film portion, a second electrode portion having a plurality of one surface electrodes arranged to be spaced apart from each other on one surface of the second film portion and a plurality of back surface electrodes arranged to be spaced apart from each other on a back surface of the second film portion, and a second connection portion connecting a plurality of one surface electrodes of the second electrode portion and a plurality of back surface electrodes of the second electrode portion, and connecting the second one surface electrodes and the second back surface electrodes arranged at position facing each other; and an insulating portion insulating the first pattern portion and the second pattern portion.

The first film portion may include at least one first hole formed at an arrangement position of the first one surface electrode, the second film portion may include at least one second hole arranged at an arrangement position of the second one surface electrode, the first connection portion may be arranged in the at least one first hole, and the second connection portion may be arranged in the at least one second hole.

The first connection portion may be arranged on each of a first side and a second side of the first film portion and connect the first one surface electrode and the first back surface electrode which are arranged to face each other, and the second connection portion may be arranged on each of a first side and a second side of the second film portion and connect the second one surface electrode and the second back surface electrode which are arranged to face each other.

The first connection portion may connect a first extension portion extending from both ends of the first one surface electrode and a second extension portion extending from both ends of the first back surface electrode, and the second connection portion may connect a first extension portion extending from both ends of the second one surface electrode and a second extension portion extending from both sides of the second back surface electrode.

The touch panel may further include: a first wire portion connected to the first electrode portion and receiving an input of a signal; and a second wire portion connected to the second electrode portion and outputting a signal.

The insulating portion may include an adhesive material.

The plurality of first electrodes and the plurality of second electrodes may intersect each other.

The first film portion and the second film portion may include glass or plastic.

The first connection portion may short-circuit the first one surface electrode and the first back surface electrode which are arranged to face each other, and the second connection portion may short-circuit the second one surface electrode and the second back surface electrode which are arranged to face each other.

In accordance with an aspect of yet another exemplary embodiment, there is provided a touch panel, including: a first pattern portion including a first film portion in which a plurality of first holes are formed at predetermined intervals, a first electrode portion having a plurality of first electrodes which are arranged to face each other on both surfaces of the first film portion and are arranged at positions in which the plurality of first holes are arranged, and a first connection portion provided in the first hole; a second pattern portion including a second film portion in which a plurality of first holes are formed at predetermined intervals, a second electrode portion having a plurality of second electrodes which are arranged to face each other on both surfaces of the second film portion and are arranged at positions in which the plurality of second holes are arranged, and a second connection portion provided in the second hole; and an insulating portion arranged on the first pattern portion and the second pattern portion.

The first electrode may include a plurality of first one surface electrodes arranged to be spaced apart from each other on one surface of the first film portion, and a plurality of first back surface electrodes arranged to be spaced apart from each other on a back surface of the first film portion, the second electrode may include a plurality of second one surface electrodes arranged to be spaced apart from each other on one surface of the second film portion, and a plurality of second back surface electrodes arranged to be spaced apart from each other on a back surface of the second film portion, and the plurality of first electrodes and the plurality of second electrodes may intersect each other.

The plurality of first holes may include at least two first holes formed at a position in which each of the plurality of first electrodes is arranged, and the plurality of second holes may include at least two second holes formed at a position in which each of the plurality of second electrodes is arranged.

The touch panel may further include: a first wire portion connected to the first electrode portion and receiving an input of a signal; and a second wire portion connected to the second electrode portion and outputting a signal.

In accordance with an aspect of yet another exemplary embodiment, there is provided a display device including: a display panel configured to display an image; a touch panel arranged to be adjacent to the display panel, and outputting a touch signal; a transparent protective panel arranged to be adjacent to the touch panel; a bezel configured to cover edges of sides of the display panel, the touch panel, and the transparent protective panel; and a chassis coupled to the bezel and configured to cover a back surface of the display panel, wherein the touch panel includes a first pattern portion including a first film portion, and a first electrode portion in which a first electrode which is short-circuited is arranged on the first film portion and a plurality of first electrodes are arranged to be spaced apart from each other; a second pattern portion including a second film portion, and a second electrode portion in which a second electrode which is short-circuited is arranged on the second film portion and a plurality of second electrodes are arranged to be spaced apart from each other; and an insulating portion insulating the first pattern portion and the second pattern portion.

The display panel may include a liquid crystal panel configured to form the image, a backlight unit configured to emit light to the liquid crystal panel, and an optical sheet arranged between the liquid crystal panel and the backlight unit and improving optical characteristics of the light emitted from the backlight unit.

The first electrode portion may include a plurality of first one surface electrodes arranged to be spaced apart from each other on one surface of the first film portion, and a plurality of first back surface electrodes arranged to be spaced apart from each other on a back surface of the first film portion, the second electrode portion may include a plurality of second one surface electrodes arranged to be spaced apart from each other on one surface of the second film portion, and a plurality of second back surface electrodes arranged to be spaced apart from each other on a back surface of the second film portion, the first pattern portion may further include a plurality of first connection portions connecting the first one surface electrodes and the first back surface electrodes arranged to face each other, and the second pattern portion may further include a plurality of second connection portions connecting the second one surface electrodes and the second back surface electrodes arranged to face each other.

The first film portion may include at least one first hole formed at an arrangement position of the first one surface electrode, the second film portion may include at least one second hole arranged at an arrangement position of the second one surface electrode, the first connection portion may be arranged in the at least one first hole, and the second connection portion may be arranged in the at least one second hole.

The first connection portion may be arranged on each of a first side and a second side of the first film portion and connect the first one surface electrode and the first back surface electrode which are arranged to face each other, and the second connection portion may be arranged on each of a first side and a second side of the second film portion and connect the second one surface electrode and the second back surface electrode which are arranged to face each other.

The first connection portion may connect a first extension portion extending from both ends of the first one surface electrode and a second extension portion extending from both ends of the first back surface electrode, and the second connection portion may connect a first extension portion extending from both ends of the second one surface electrode and a second extension portion extending from both ends of the second back surface electrode.

The first connection portion may short-circuit the first one surface electrode and the first back surface electrode arranged to face each other, and the second connection portion may short-circuit the second one surface electrode and the second back surface electrode arranged to face each other.

The display device may further include: a first wire portion connected to the first electrode portion and receiving an input of a signal; and a second wire portion connected to the second electrode portion and outputting a signal.

The plurality of first electrodes and the plurality of second electrodes may intersect each other.

The display device may further include: a first gap portion formed between the display panel and the touch panel, and a second gap portion formed between the touch panel and the transparent protective panel and having an adhesive.

The first gap portion may include an air gap.

The first gap portion may include an adhesive

In accordance with an aspect of yet another exemplary embodiment, there is provided a touch panel including: a first pattern portion including: a first film portion; and a first electrode portion including a plurality of first electrodes provided on the first film portion and spaced apart from one another, a first electrode of the plurality of first electrodes being short-circuited; a second pattern portion including: a second film portion; and a second electrode portion including a plurality of second electrodes provided on the second film portion and spaced apart from one another, a second electrode of the plurality of second electrodes being short-circuited; and an insulating portion configured to insulate the first pattern portion and the second pattern portion from each other.

The plurality of first electrodes may include: a first surface electrode arranged on a first surface of the first film portion, and a second surface electrode arranged on a second surface opposite to the first surface of the first film portion, and the second electrode of the plurality of second electrodes may include: a third surface electrode arranged on a first surface of the second film portion, and a fourth surface electrode arranged on a second surface opposite to the first surface of the second film portion.

The first pattern portion may further include a first connection portion connecting the first surface electrode and the second surface electrode arranged at respective positions to face each other, and the second pattern portion may further include a second connection portion connecting the third surface electrode and the fourth surface electrode arranged at respective positions to face each other.

The first film portion may include at least one first hole, wherein the second film portion includes at least one second hole, wherein the first connection portion is provided in the at least one first hole, and wherein the second connection portion is provided in the at least one second hole.

The first connection portion may include: a first end connection portion arranged on a first side of the first film portion; and a second end connection portion arranged on a second side opposite to the first side of the first film portion, the first and the second end connection portions connecting the first surface electrode and the second surface electrode arranged to face each other, and wherein the second connection portion may include: a third end connection portion arranged on a first side of the second film portion; and a fourth end connection portion arranged on a second side opposite to the first side of the second film portion, the third and the fourth end connection portions connecting the third surface electrode and the fourth surface electrode arranged to face each other.

The first connection portion may connect a first extension portion extending from opposite ends of the first surface electrode and a second extension portion extending from opposite ends of the second surface electrode, and the second connection portion may connect a third extension portion extending from opposite ends of the third surface electrode and a fourth extension portion extending from opposite ends of the fourth surface electrode.

The touch panel may further include: a first wire portion connected to the first electrode portion and configured to receive an input of a signal; and a second wire portion connected to the second electrode portion and configured to output a signal.

The plurality of first electrodes and the plurality of second electrodes may intersect one another.

Each of the first film portion and the second film portion may include glass or plastic.

In accordance with an aspect of yet another exemplary embodiment, there is provided a touch panel including: a first pattern portion including: a first film portion; a first electrode portion including: a plurality of first surface electrodes arranged to be spaced apart from one another on a first surface of the first film portion and a plurality of second surface electrodes arranged to be spaced apart from one another on a second surface opposite to the first surface of the first film portion, and a first connection portion connecting a first electrode of the plurality of first surface electrodes of the first electrode portion and a second electrode of the plurality of second surface electrodes of the first electrode portion arranged at position facing each other; a second pattern portion may include: a second film portion; a second electrode portion including: a plurality of third surface electrodes arranged to be spaced apart from one another on a third surface of the second film portion; and a plurality of second surface electrodes arranged to be spaced apart from one another on a fourth surface opposite to the third surface of the second film portion, and a second connection portion connecting a third electrode of the plurality of third surface electrodes of the second electrode portion and a fourth electrode of the plurality of fourth surface electrodes of the second electrode portion arranged at position facing each other; and an insulating portion configured to insulate the first pattern portion and the second pattern portion.

The first film portion may include at least one first hole, wherein the second film portion includes at least one second hole, wherein the first connection portion is provided in the at least one first hole, and wherein the second connection portion is provided in the at least one second hole.

The first connection portion may be arranged on each of a first side and a second side opposite to the first side of the first film portion and connects the first electrode and the second electrode which are arranged to face each other, and wherein the second connection portion is arranged on each of a first side and a second side of the second film portion and connects the third electrode and the fourth electrode which are arranged to face each other.

The first connection portion may connect a first extension portion extending from opposite ends of the first electrode and a second extension portion extending from opposite ends of the second electrode, and the second connection portion may connect a third extension portion extending from opposite ends of the third electrode and a fourth extension portion extending from opposite ends of the fourth electrode.

The plurality of first electrodes may extend in a first direction and the plurality of second electrodes may extend in a second direction, and wherein the first direction and the second direction intersect each other.

The first connection portion may be configured to short-circuit the first electrode and the second electrode which are arranged to face each other, and the second connection portion may be configured to short-circuit the third electrode and the fourth electrode which are arranged to face each other.

In accordance with an aspect of yet another exemplary embodiment, there is provided a touch panel including: a first pattern portion including: a first film portion including: a plurality of first holes provided at a first predetermined interval; a first electrode portion including a plurality of first electrodes provided on opposite surfaces of the first film portion and arranged to face one another at positions in which the plurality of first holes are provided; and a first connection portion provided in the first hole; a second pattern portion including: a second film portion including a plurality of second holes provided at a second predetermined interval; a second electrode portion including a plurality of second electrodes provided on opposite surfaces of the second film portion and arranged to face one another at positions in which the plurality of second holes are provided; and a second connection portion provided in the second hole; and an insulating portion arranged on the first pattern portion and the second pattern portion.

The plurality of first electrodes may include: a plurality of first surface electrodes arranged to be spaced apart from one another on a first surface of the first film portion; and a plurality of second surface electrodes arranged to be spaced apart from one another on a second surface opposite to the first surface of the first film portion, the plurality of second electrodes may include: a plurality of third surface electrodes arranged to be spaced apart from one another on a third surface of the second film portion; and a plurality of fourth surface electrodes arranged to be spaced apart from one another on a fourth surface opposite to the third surface of the second film portion, and wherein the plurality of first electrodes extend in a first direction and the plurality of second electrodes extend in a second direction, the first and second directions intersecting each other.

The plurality of first holes may include at least two first holes formed in the first film portion at a position in which a first electrode of the plurality of first electrodes is arranged, and the plurality of second holes may include at least two second holes formed in the second film portion at a position in which a second electrode of the plurality of second electrodes is arranged.

In accordance with an aspect of yet another exemplary embodiment, there is provided a touch panel, comprising: a first pattern portion comprising a plurality of first electrodes spaced apart from each other and a first film portion, wherein each first electrode comprises two electrode portions on opposite surfaces of the first film portion that are electrically connected to each other; a second pattern portion comprising a plurality of second electrodes spaced apart from each other and a second film portion, wherein each second electrode comprises two electrode portions on opposite surfaces of the second film portion that are electrically connected to each other; and an insulating portion configured to insulate the first pattern portion and the second pattern portion.

In accordance with an aspect of yet another exemplary embodiment, there is provided a display device including: a display panel configured to display an image; a touch panel arranged to be adjacent to the display panel, and configured to output a touch signal; a transparent protective panel arranged to be adjacent to the touch panel; a bezel configured to cover edges of the display panel, the touch panel, and the transparent protective panel; and a chassis coupled to the bezel and configured to cover a back surface of the display panel, wherein the touch panel includes: a first pattern portion including: a first film portion; and a first electrode portion including a plurality of first electrodes provided on the first film portion and arranged to be spaced apart from one another, a first electrode of the plurality of first electrodes configured to be short-circuited; a second pattern portion including: a second film portion; and a second electrode portion including a plurality of second electrodes provided on the second film portion and arranged to be spaced apart from each other, a second electrode of the plurality of second electrodes configured to be short-circuited; and an insulating portion configured to insulate the first pattern portion and the second pattern portion.

The display panel may include: a liquid crystal panel configured to form the image; a backlight unit configured to emit light to the liquid crystal panel; and an optical sheet arranged between the liquid crystal panel and the backlight unit and configured to change optical characteristics of the light emitted from the backlight unit.

The first electrode portion may include: a plurality of first surface electrodes arranged to be spaced apart from one another on a first surface of the first film portion, and a plurality of second surface electrodes arranged to be spaced apart from one another on a second surface opposite to the first surface of the first film portion, the second electrode portion may include: a plurality of third surface electrodes arranged to be spaced apart from one another on a first surface of the second film portion; and a plurality of fourth surface electrodes arranged to be spaced apart from one another on a second surface opposite to the first surface of the second film portion, wherein the first pattern portion may further include a plurality of first connection portions connecting the plurality of first surface electrodes and the plurality of second surface electrodes arranged to face each other, and wherein the second pattern portion may further include a plurality of second connection portions connecting the plurality of third surface electrodes and the plurality of fourth surface electrodes arranged to face each other.

The first connection portion may include: a first end connection portion arranged on a first side of the first film portion; and a second end connection portion arranged on a second side opposite to the first side of the first film portion, the first and the second end connection portions connecting the first surface electrode and the second surface electrode arranged to face each other, and wherein the second connection portion may include: a third end connection portion arranged on a first side of the second film portion; and a fourth end connection portion arranged on a second side opposite to the first side of the second film portion, the third and the fourth end connection portions connecting the third surface electrode and the fourth surface electrode arranged to face each other.

The first connection portion may connect a first extension portion extending from opposite ends of the first surface electrode and a second extension portion extending from opposite ends of the second surface electrode, and the second connection portion may connect a third extension portion extending from opposite ends of the third surface electrode and a fourth extension portion extending from opposite ends of the fourth surface electrode.

The first connection portion may be configured to short-circuit the first surface electrode and the second surface electrode arranged to face each other, and the second connection portion may be configured to short-circuit the third surface electrode and the fourth surface electrode arranged to face each other.

The display device may further include: a first gap portion formed between the display panel and the touch panel; and a second gap portion provided between the touch panel and the transparent protective panel and having an adhesive.

The first gap portion may include an air gap.

The first gap portion may include an adhesive..

The above and/or other aspects of the disclosure will become apparent and more readily appreciated from the following description of the embodiments, taken in conjunction with the accompanying drawings of which:
FIG. 1A is a diagram illustrating a display device having a touch panel according to an exemplary embodiment;
FIG. 1B is a diagram illustrating a display device having a touch panel according to an exemplary embodiment;
FIG. 2 is a diagram illustrating a structure of a display device having a touch panel according to an exemplary embodiment;
FIGS. 3A, 3B, 4A and 4B are cross-sectional views of a display device having a touch panel according to an exemplary embodiment;
FIG. 5 is a diagram illustrating a touch panel according to an exemplary embodiment;
FIG. 6 is a detailed diagram illustrating a structure of a first pattern portion provided in a touch panel 200 according to an exemplary embodiment;
FIG. 7 is a detailed diagram illustrating a structure of a second pattern portion provided in a touch panel 200 according to an exemplary embodiment;
FIGS. 8 and 9 are diagrams illustrating shapes of electrodes of a first pattern portion and a second pattern portion of a touch panel 200 according to an exemplary embodiment;
FIGS. 10 and 11 are diagrams illustrating shapes of electrodes of a first pattern portion and a second pattern portion of a touch panel 200 according to an exemplary embodiment;
FIG. 12 is a cross-sectional view taken along line X of a touch panel shown in FIG. 5;
FIG. 13 is a cross-sectional view taken along line Y of a touch panel shown in FIG. 5;
FIGS. 14A, 14B and 15 are diagrams for describing a response time of a touch panel according to an exemplary embodiment;
FIG. 16 is a diagram illustrating a touch panel according to an exemplary embodiment;
FIGS. yA and 17B are detailed diagrams illustrating shapes of a first pattern portion and a second pattern portion of a touch panel shown in FIG. 16;
FIG. 18A is a cross-sectional view taken along line X of a touch panel shown in FIG. 16;
FIG. 18B is a cross-sectional view taken along line Y of a touch panel shown in FIG. 16;
FIG. 19 illustrates a touch panel according to an exemplary embodiment;
FIGS. 20A and 20B are diagrams illustrating shapes of a first pattern portion and a second pattern portion of a touch panel shown in FIG. 19;
FIG. 21A is a cross-sectional view taken along line X of a touch panel shown in FIG. 19;
FIG. 21B is a cross-sectional view taken along line Y of a touch panel shown in FIG. 19;
FIG. 22 illustrates a touch panel according to an exemplary embodiment 0;
FIGS. 23A and 23B are diagrams illustrating shapes of a first pattern portion and a second pattern portion of a touch panel shown in FIG. 22;
FIG. 24A is a cross-sectional view taken along line X of a touch panel shown in FIG. 22;
FIG. 24B is a cross-sectional view taken along line Y of a touch panel shown in FIG. 22;
FIG. 25 is a cross-sectional view taken along line A of a second pattern portion;
FIG. 26 illustrates a touch panel according to an exemplary embodiment;
FIG. 27 is a diagram illustrating a first pattern portion and a second pattern portion of a touch panel shown in FIG. 26;
FIG. 28A is a diagram illustrating a structure of a first pattern portion provided in a touch panel shown in FIG. 26; and
FIG. 28B is a diagram illustrating a structure of a second pattern portion provided in a touch panel shown in FIG. 26.

Reference will now be made in detail to exemplary embodiments, examples of which are illustrated in the accompanying drawings, wherein like reference numerals refer to like elements throughout.

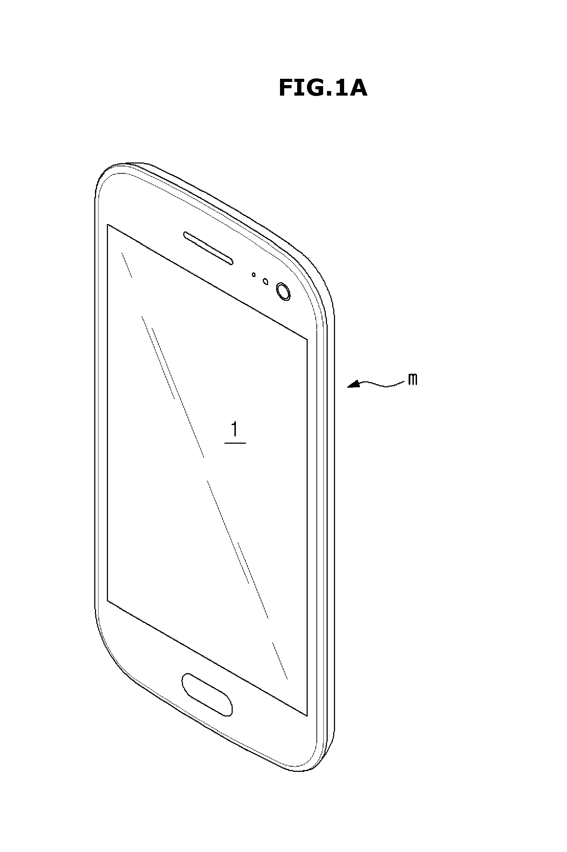

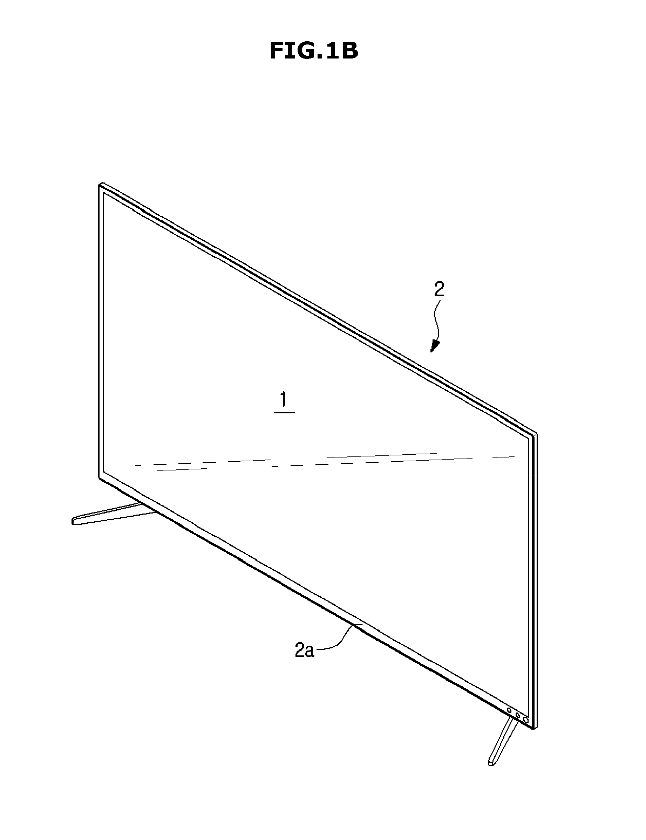

FIG. 1A is a diagram illustrating a display device having a touch panel according to an exemplary embodiment, and FIG. 1B is a diagram illustrating a display device having a touch panel according to an exemplary embodiment;

A display device having a touch panel (or touch screen) recognizes a touch position and a change in the position when a man's hand or an object touches a screen, confirms a gesture corresponding to the change in the position, confirms an operation command corresponding to the touch position or an operation command corresponding to the gesture, perform a function corresponding to the confirmed operation command, and displays an image with respect to the function performed.

As shown in FIG. 1A, the display device having a touch panel unit 1 may be implemented as a display unit of a mobile device m such as a smart phone, a tablet personal computer (PC), and a notebook computer, and as shown in FIG. 1B, may be implemented as a television 2 having an outer bezel 2a.

Further, the display device having a touch panel unit 1 may be implemented as a monitor of a PC, or as an information display in a bus station, a subway station, a department store, etc.

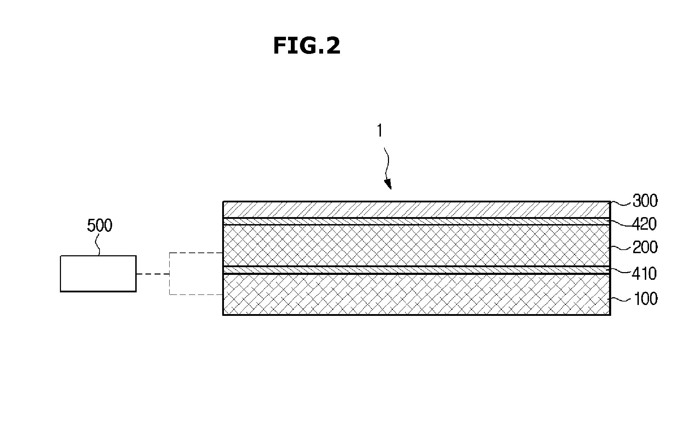

As shown in FIG. 2, the touch panel unit 1 of each of the display devices m and 2 may include a display panel 100 displaying an image such as a character, a drawing, a photograph, etc., a touch panel 200 arranged to be adjacent to the display panel 100 and outputting a touch signal when being touched by a user, and a transparent protective panel 300 arranged on the touch panel 200, and may further include a first gap portion 410 formed between the display panel 100 and the touch panel 200, and a second gap portion 420 formed between the touch panel 200 and the transparent protective panel 300.

The display panel 100 may include any one among a liquid crystal display (LCD) device, an electro luminescence display (ELD) device, a field emission display (FED) device, a plasma display panel, a thin film transistor-liquid crystal display (TFT-LCD) device, an organic light emitting diode display (OLED).

The transparent protective panel 300 may be a glass plate, a polymer film or substrate formed of polycarbonate, polyethylene terephthalate, or polyacryl, etc.

The first gap portion 410 may be formed as an air gap, or an optical clear adhesive (OCA) may be formed therein.

The OCA may be formed inside the second gap portion 420.

In the exemplary embodiment, the transparent protective panel 300 may be formed of an adhesive composite including a single type or a mixture of two or more types of adhesive resins such acryl resins, silicon resins, styrene resins, polyester resins, rubber resins, or urethane resins.

The touch panel unit 1 of each of the display devices m and 2 may further include a driving module 500 which confirms a position of a touch point based on a touch signal output from the touch panel 200, which confirms an icon displayed on the confirmed position of the touch point, which controls to perform a function corresponding to the confirmed icon, and which controls the display panel 100 to display a result of the performed function.

In the exemplary embodiment, the driving module 500 may confirm a gesture received on the touch panel 200 based on a change in the position of the touch point, confirm an operation command corresponding to the confirmed gesture, and control the driving of the display panel 100.

Further, images of the character, drawing, photograph, etc., displayed on the display panel 100 may have information of a display position.

The display device 2 having the touch panel unit 1 may have a different inner configuration according to a type of a backlight unit of transmitting light to the display panel 100.

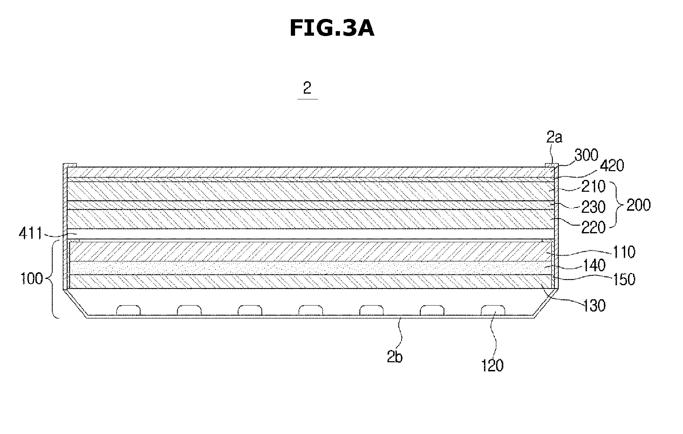

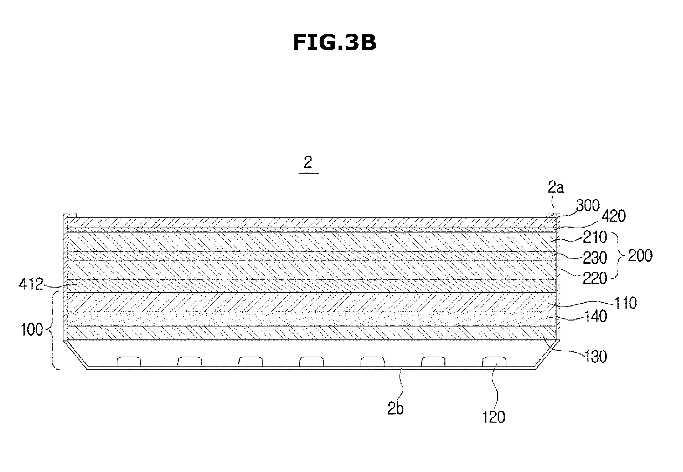

FIGS. 3A and 3B illustrate structures of the display device 2 having the touch panel 200 and a direct type backlight unit 120. An example of an LCD television will be described.

As shown in FIG. 3A, the display device 2 may have a display panel 100, a touch panel 200, and a transparent protective panel 300 arranged inside an outer bezel 2a forming the exterior of the display device 2.

Further, a first gap portion 411 formed between the display panel 100 and the touch panel 200, and a second gap portion 420 formed between the touch panel 200 and the transparent protective panel 300 may be provided inside the outer bezel 2a.

Here, the first gap portion 411 may be formed as an air gap, and the second gap portion 420 may include an OCA provided thereinside.

The first gap portion 411 between the display panel 100 and the touch panel 200 may be maintained a predetermined distance apart by an inner bezel 150.

For example, the display panel 100 may include a liquid crystal panel 110 which is an image forming panel which forms images such as a character, a number, an arbitrary icon, etc., by adjusting permeability of light passing through a liquid crystal layer, a backlight unit 120 arranged on a back surface of the liquid crystal panel 110 and emitting the light to the liquid crystal panel 110, a diffusion plate 130 increasing an amount of light of the backlight unit 120 and evenly maintaining brightness of an entire surface, and an optical sheet 140 arranged between the liquid crystal panel 110 and the diffusion plate 130.

The liquid crystal panel 110 may display an image by adjusting penetration amounts and colors of the light emitted from the backlight unit 120 because a liquid crystal itself does not emit the light.

The backlight unit 120 may be a light source device of emitting the light in the back of the liquid crystal panel 110, and be a direct type LED device.

The backlight unit 120 may include a plurality of light sources (not shown) emitting the light using power supplied from an optical driving unit (not shown), and the plurality of light sources may include an LED of emitting the light using high efficiency and low power.

The diffusion plate 130 may be located between the liquid crystal panel 110 and the backlight unit 120, be a translucent panel of displaying so that the entire screen has an even color and brightness by diffusing the light emitted from the backlight unit 120 along a surface, and improve the brightness of the light emitted from the backlight unit 120 to provide the improved light to the display panel 100.

That is, the diffusion plate 130 may further include the protection sheet for protecting the display panel 100 from external impact.

The optical sheet 140 may improve light characteristics by decreasing the brightness of red R and green G and increasing the brightness of blue B of the light incident to the liquid crystal panel 110.

Further, an electromagnetic shield film of protecting an electromagnetic wave incident to the display panel by shielding the electromagnetic wave from being emitted to the outside, and an infrared ray shield film of protecting an infrared ray which is equal to or more than a reference amount from being emitted to the outside so that signal transmitted using the infrared ray such as a remote controller, etc., is normally transmitted by shielding the infrared ray emitted from the display panel may be further included.

The display panel 100 may further include an inner bezel 150 arranged on edges of sides of a liquid crystal panel 110, the optical sheet 140, and the diffusion plate 130, and fixing and covering the liquid crystal panel 110, the optical sheet 140, and the diffusion plate 130.

The inner bezel 150 may be coupled to a chassis 2b in which the backlight unit 120 is arranged, be coupled to the outer bezel 2a, and perform a function of maintain so that the display panel 100 and the touch panel 200 are spaced apart by a predetermined distance.

Further, various types of printed circuit boards and input and output devices, etc, may be installed in the chassis 2b.

The chassis 2b may be formed of a metal in which heat dissipation and strength are excellent.

A driving module 500 for driving the liquid crystal panel 110, the backlight unit 120, and the touch panel 200 may be arranged inside the chassis 2b.

As shown in FIG. 3B, the display device 2 may include a display panel 100, a touch panel 200, and a transparent protective panel 300 arranged inside the outer bezel 2a forming the exterior of the display device 2.

Further, a first gap portion 412 formed between the display panel 100 and the touch panel 200, and a second gap portion 420 formed between the touch panel 200 and the transparent protective panel 300 may be provided in the outer bezel 2a.

Here, the first gap portion 412 and the second gap portion 420 may be filled with an OCA.

Because the display panel 100 having a direct type backlight unit is equal to the display panel shown in FIG. 3A, detailed description thereof will be omitted.

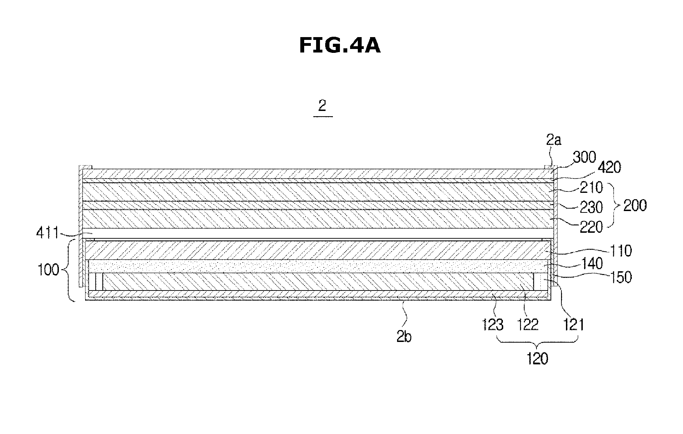

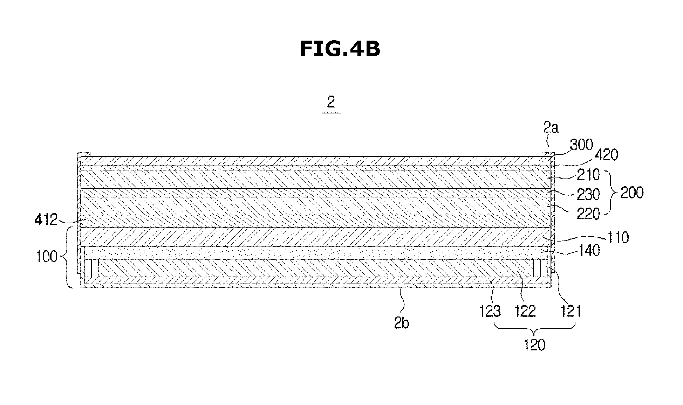

FIGS. 4A and 4B illustrate structures of the display device 2 having a touch panel and an edge type backlight unit, and an example of a television will be described.

As shown in FIG. 4A, the display device 2 may include a display panel 100, a touch panel 200, and a transparent protective panel 300 arranged inside an outer bezel 2a forming the exterior of the display device 2.

Further, a first gap portion 411 formed between the display panel 100 and the touch panel 200 in the bezel 2a, and a second gap portion 420 formed between the touch panel 200 and the transparent protective panel 300 may be provided inside the outer bezel 2a.

Here, the first gap portion 411 may be formed as an air gap, and the second gap portion 420 may include an OCA provided thereinside.

At this time, the first gap portion 411 between the display panel 100 and the touch panel 200 may be maintained a predetermined distance apart by an inner bezel 150.

More particularly, the display panel 100 may a liquid crystal panel 110 which is an image forming panel for forming images such as a character, a number, an arbitrary icon, etc., by adjusting permeability of light passing through a liquid crystal layer, a backlight unit 120 arranged on the back surface of the liquid crystal panel 110 and emitting the light to the liquid crystal panel 110, and an optical sheet 140 arranged between the liquid crystal panel 110 and the backlight unit 120.

The backlight unit 120 may be a light source device of emitting the light in sides of the liquid crystal panel 110, and be an edge type LED device.

The backlight unit 120 may include a plurality of optical modules 121, and a light guide plate 122 and a reflective sheet 123 arranged between the plurality of optical modules.

Here, the plurality of optical modules 121 may include an LED emitting the light with high efficiency and low power.

The light guide plate 122 may guide incident light to the liquid crystal panel 110, and have a flat type by a plastic material such as polymethylmethacrylate (PMMA) which is a transparent acryl resin which is one of materials, which has permeability, capable of penetrating the light or polycarbonate (PC).

The light guide plate 122 may lead diffusion of the light due to its excellent transparency, weather resistance, tinting when the light is penetrated.

The reflective sheet 123 may be arranged between the light guide plate 122 and the chassis 2b, and reflect the light provided from the light guide plate 122 to sides or a front of the light guide plate 122.

The optical sheet 140 may make the brightness of the light output from the light guide plate 122 uniform, improve light characteristics using a method of diffusing the light or collecting the light of high brightness, and provide the improved light to the liquid crystal panel 110.

Further, the optical sheet 140 may improve the light characteristics by decreasing the brightness of red R and green G and increasing the brightness of the blue light B of the light incident on the liquid crystal panel 110.

The optical sheet 140 may be a sheet arranged between the display panel 100 and the backlight unit 120, and include a prism sheet of which a prism is formed and a dual brightness enhancement film (DBEF) by a multi-layer coating of birefringence.

The display panel 100 may further include a chassis 2b accommodating the backlight unit 120 and the optical sheet 140, and an inner bezel 150 accommodating the liquid crystal panel 110 and coupled to the chassis 2b.

The inner bezel 150 may be coupled to an outer bezel 2a.

Further, various printed circuit boards, input and output devices, etc., may be installed in the chassis 2b.

The chassis 2b may be formed of a metal having excellent heat dissipation and strength.

A driving module 500 for driving the liquid crystal panel 110, the backlight unit 120, and the touch panel 200 may be arranged inside the chassis 2b.

As shown in FIG. 4B, the display device 2 may include a display panel 100, a touch panel 200, and a transparent protective panel 300 arranged inside the outer bezel 2a forming appearance.

Further, the first gap portion 412 formed between the display panel 100 and the touch panel 200, and the second gap portion 420 formed between the touch panel 200 and the transparent protective panel 300 may be provided inside the outer bezel 2a.

Here, the first gap portion 412 and the second gap portion 420 may be filled with an OCA.

Because the display panel 100 having an edge type backlight unit 120 is equal to the display panel shown in FIG. 4a, detailed description thereof will be omitted.

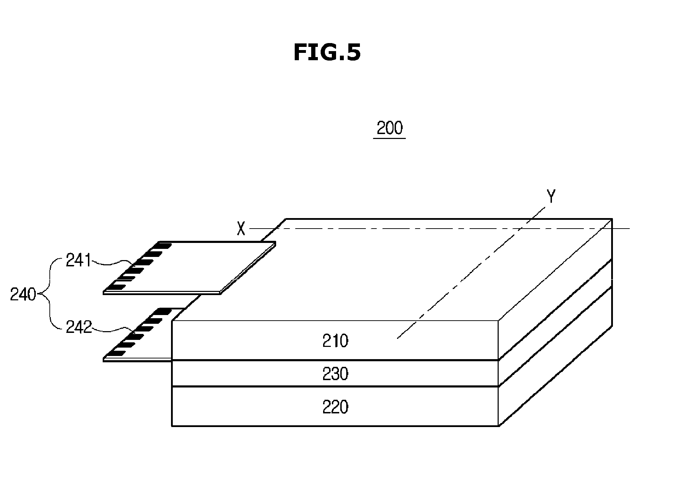

FIG. 5 is a diagram illustrating a touch panel 200 according to an exemplary embodiment, and a touch panel 200 may include a first pattern portion 210, a second pattern portion 220, and an insulating portion 230.

The first pattern portion 210 may be arranged in a first direction, may include a plurality of first electrodes spaced apart by a predetermined distance extending in the first direction, and may receive a signal transmitted from the driving module 500 .

The second pattern portion 220 may be arranged in a second direction, may include a plurality of second electrodes spaced apart by a predetermined distance and extending in the second direction, and output a signal to the driving module 500.

In the exemplary embodiment, any one of the plurality of first electrodes and the plurality of second electrodes may be a driving electrode to which a predetermined voltage is applied, and the other of the plurality of first electrodes and the plurality of second electrodes may be a sensing electrode of outputting a voltage signal corresponding to whether the touch panel 200 is touched.

The first direction may be an X direction, the second direction may be a Y direction, and the first direction and the second direction may be directions intersecting each other.

An insulating portion 230 may be a transparent material, be arranged between the first pattern portion 210 and the second pattern portion 220, bond the second pattern portion 220 to the first pattern portion 210, and insulate the first pattern portion 210 and the second pattern portion 220 from each other.

The insulating portion 230 may include an adhesive, and in the exemplary embodiment, the adhesive may include a single type or mixture of two or more types among adhesive resins such as acryl resins, silicon resins, polyester resins, rubber resins or urethane resins, isocyanate resins, polyvinyl alcohols, gelatin resins, vinyl polymers, latices, etc.

The bonding method may be performed by a method in which one surface of one of the pattern portions is coated with the adhesive, the other pattern portion is bonded thereon, and then is dried.

The coating method may be a method such as a flexible method, Meyer bar, air knife, gravure, reverse roll, kiss roll, spray, blade, die coater, casting, spin coating, etc.

The touch panel 200 may further include a wire portion 240 applying a signal having a predetermined voltage to the first electrode of the plurality of first electrodes, and sensing a signal of a voltage changed in the second electrode of the plurality of second electrodes.

The wire portion 240 may include a first wire portion 241 connected to the first pattern portion 210, inputting a signal having a voltage transmitted from the driving module 500, and transmitting the input signal having the voltage to the first pattern portion 210, and a second wire portion 242 connected to the second pattern portion 220, receiving a signal of a sensed voltage, and transmitting the received signal having the voltage to the driving module 500.

In the exemplary embodiment, the first wire portion 241 and the second wire portion 242 may include a flexible printed circuit board (FPCB), respectively.

A material of each wire portion 241 and 242 may be a metal material such as Al, AlNd, MoTi, Cu, CuOx, Cr, etc., and a method of forming each wire portion may be a method such as screen printing, gravure printing, inkjet printing, etc.

Further, a material of each wire portion 241 and 242 may be a composite material of silver paste (Ag paste) or organic silver having excellent conductivity, conductivity polymer, carbon black (including CNT), a metal oxide material, a metal, etc.

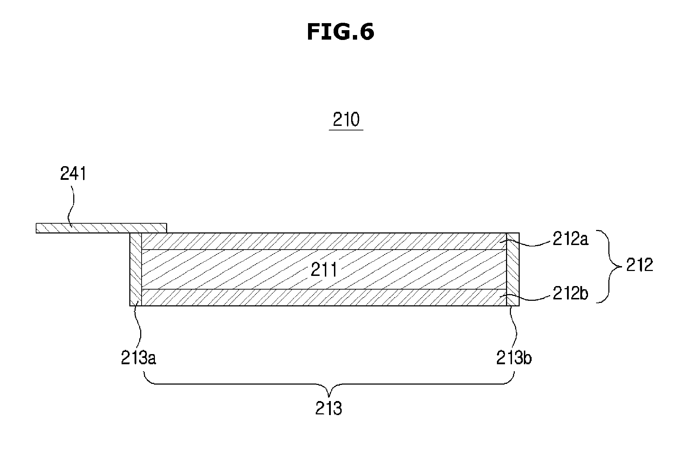

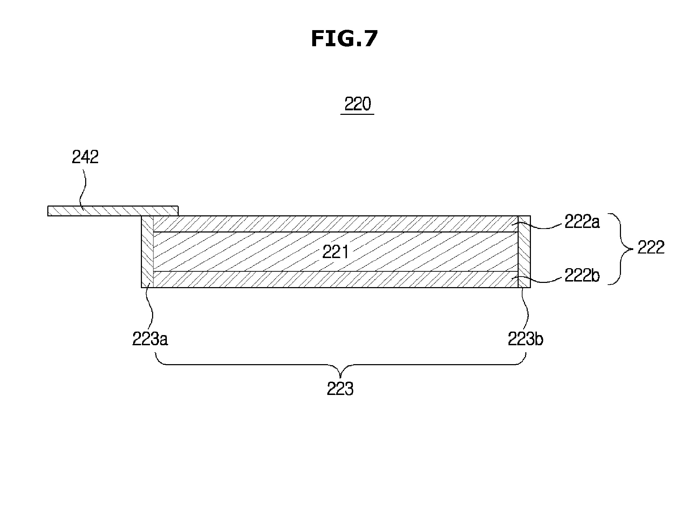

FIG. 6 is a detailed diagram illustrating a structure of a first pattern portion 210 provided in a touch panel 200 according to an exemplary embodiment, and FIG. 7 is a detailed diagram illustrating a structure of a second pattern portion 220 provided in a touch panel 200 according to an exemplary embodiment.

As shown in FIG. 6, the first pattern portion 210 may include a first film portion 211 and a first electrode portion 212 having a plurality of first electrodes 212a and 212b arranged on the first film portion 211.

The first film portion 211 may have a bearing capacity and transparency and be formed of a plastic film such as polyethylene terephthalate (PET), poly carbonate (PC), polymethyl methacrylate (PMMA), polyethylene naphthenate (PEN), polyethylene sulfone (PES), cyclic olefin polymer (COC), a triacetyl cellulose (TAC) film, a polyvinyl alcohol (PVA) film, a polyimide (PI) film, polystyrene (PS), a biaxially oriented PS (BOPS) film, etc., glass or strong glass, etc.

The plurality of first electrodes 212a and 212b of the first electrode portion 212 may include a first front surface electrode 212a arranged in a first direction on the front surface surface of the first film portion 211, and a first back surface electrode 212b arranged in the first direction on the back surface of the first film portion 211.

The plurality of first front surface electrodes 212a and the plurality of first back surface electrodes 212b may be arranged to face each other.

Here, the back surface of the first film portion 211 may be be a surface facing with front surface of the first film portion 211.

A first wire portion 241 may be connected to the first front surface electrode 212a and the first back surface electrode 212b of the first electrode portion 212.

The first pattern portion 210 may further include a first connection portion 213 connecting the first front surface electrode 212a and the first back surface electrode 212b of the first electrode portion 212.

The first connection portion 213 may include a first left end connection portion 213a arranged on a left side of the first film portion 211 and connecting a left end of the first front surface electrode 212a and a left end of the first back surface electrode 212b, and a first right end connection portion 213b arranged on a right side of the first film portion 211 and connecting a right end of the first front surface electrode 212a and a right end of the first back surface electrode 212b as shown in FIG. 6.

Here, the left side of the first film portion 211 may be a surface facing the right side.

Further, the first wire portion 241 may be connected to the first left end connection portion 2i3a or the first right end connection portion 213b.

As shown in FIG. 7, the second pattern portion 220 may include a second film portion 221, and a second electrode portion 222 having a plurality of second electrodes 222a and 222b arranged on the second film portion 221.

The second film portion 221 may have a bearing capacity and transparency and be formed of a plastic film such as polyethylene terephthalate (PET), poly carbonate (PC), polymethyl methacrylate (PMMA), polyethylene naphthenate (PEN), polyethylene sulfone (PES), cyclic olefin polymer (COC), a triacetyl cellulose (TAC) film, a polyvinyl alcohol (PVA) film, a polyimide (PI) film, polystyrene (PS), a biaxially oriented PS (BOPS) film, etc., glass or strong glass, etc.

The plurality of second electrodes 222a and 222b of the second electrode portion 222 may include a plurality of second front surface electrodes 222a arranged in a second direction on one surface of the second film portion 221, and a plurality of second back surface electrode 222b arranged in the second direction on a back side of the second film portion 221.

The plurality of second front surface electrodes 222a and the plurality of second back surface electrodes 222b may be arranged to face each other.

In the exemplary embodiment, the back surface of the second film portion 221 may be a surface facing front surface of the second film portion 221.

A second wire portion 242 may be connected to the second front surface electrode 222a and the second back surface electrode 222b of the second electrode portion 222.

The second pattern portion 220 may further include a second connection portion 223 connecting the second front surface electrode 222a and the second back surface electrode 222b of the second electrode portion 222.

The second connection portion 223 may include a second left end connection portion 223a arranged on a left side of the second film portion 221 and connecting a left end of the second front surface electrode 222a and a left end of the second back surface electrode 222b, and a second right end connection portion 223b arranged in a second side of the second film portion 221 and connecting a right end of the second front surface electrode 222a and a right end of the second back surface electrode 222b.

Here, the left side of the second film portion may be a surface facing the right side.

Further, a second wire portion 242 may be connected to the second left end connection portion 223a or the second right end connection portion 223b.

In the exemplary embodiment, the first direction in which the first electrode of the first electrode portion 210 is arranged and the second direction in which the second electrode of the second electrode portion 220 is arranged may be a direction intersecting each other. That is, the plurality of first electrodes 212 of the first electrode portion 210 and the plurality of second electrodes 222 of the second electrode portion 220 may be arranged to intersect each other.

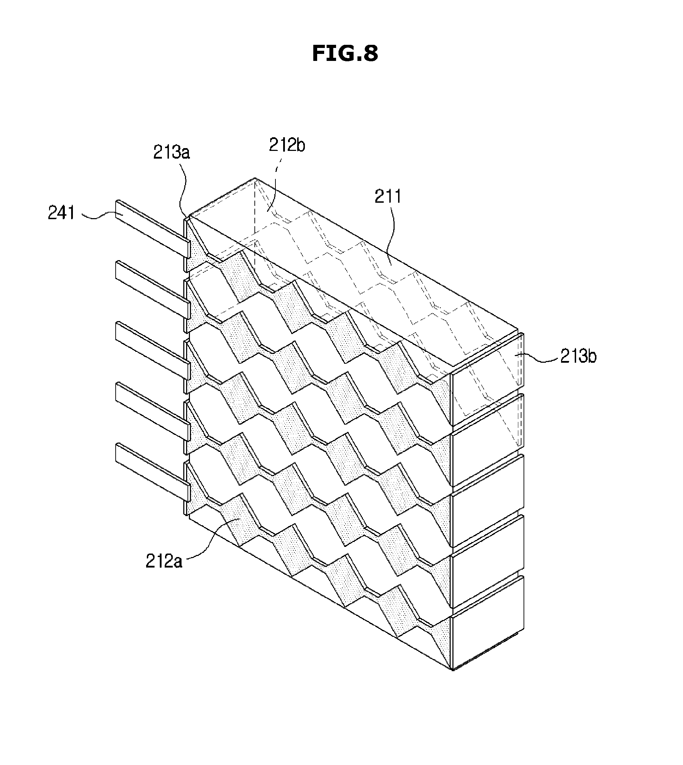

The first pattern portion 210 and the second pattern portion 220 may be arranged in a diamond shape or a stripe shape. This will be described with reference to FIGS. 8 to 11.

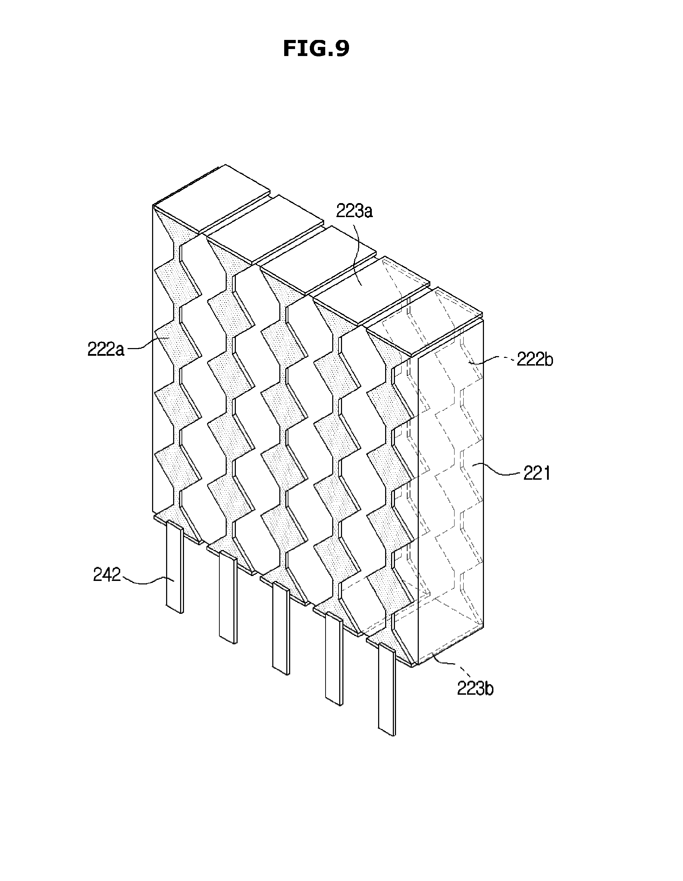

FIG. 8 illustrates an example of a first pattern portion 210 having a diamond shape, and FIG. 9 illustrates an example of a second pattern portion 220 having a diamond shape.

As shown in FIG. 8, the first electrode portion 212 of the first pattern portion 210 may include a plurality of first electrodes 212a and 212b having first fornt surface electrodes 212a arranged on a front surface of the first film portion 211 and having a diamond shape arranged in a first direction, and first back surface electrodes 212b arranged on the back surface of the first film portion 211 and having a diamond shape arranged in the first direction.

Each of the plurality of first electrodes 212a and 212b may be an electrode in which conductive portions having a plurality of the diamond shapes are continuously arranged, and form the electrode having an axis extending in the first direction.

The first front surface electrodes 212a and the first back surface electrodes 212b of the first electrode portion may have the first film portion 211 arranged therebetween, and be arranged to face each other.

The first connection portion 213 may connect the plurality of first front surface electrodes 212a and the plurality of first back surface electrodes 212b and connect the first front surface electrodes 212a and the first back surface electrodes 212b which are arranged to face each other.

In the exemplary embodiment, one of the first connection portion 213 may short-circuit the first front surface electrode 212a and the first back surface electrode 212b by connecting a left end of one of the first front surface electrodes 212a and a left end of one of the first back surface electrodes 212b, and connecting a right end of one of the first front surface electrodes 212a and a right end of one of the back surface electrode 212b.

That is, one of the plurality of first electrodes 212a and 212b may be formed by short-circuiting one of the first front surface electrodes 212a and one of the first back surface electrodes 212b.

Each of the first wire portion 241 may be connected to a left end of each of the plurality of first front surface electrodes 212a, and a signal having a predetermined voltage may be applied to each of the first front surface electrodes 212a.

As shown in FIG. 9, a second electrode portion 222 of the second pattern portion 220 may include a plurality of second electrodes 222a and 222b having second front surface electrodes 222a arranged on a front surface of the second film portion 221 and having a diamond shape arranged in a second direction, and a second back surface electrodes 222b arranged on the back side of the second film portion 221 and having a diamond shape arranged in the second direction.

Each of the plurality of second electrodes 222a and 222b may be an electrode in which conductive portions having a plurality of diamond shapes are continuously arranged and form the electrode having an axis extending in the second direction.

The second front surface electrode 222a and the second back surface electrode 222b of the second electrode portion 220 may have the second film portion 221 arranged therebetween, and be arranged to face each other.

The second connection portion 223 may connect the plurality of second front surface electrodes 222a and the plurality of second back surface electrodes 222b and connect a second front surface electrode 222a of the plurality of second front surface electrodes 222a and a second back surface electrode 222b of the plurality of second back surface electrodes 222b which are arranged to face each other.

In the exemplary embodiment, one of the second connection portion 223 may short-circuit the second front surface electrode 222a and the second back surface electrode 222b by connecting a left end of one of the second front surface electrodes 222a and a left end of one of the second back surface electrodes 222b, and connecting a right end of one of the second front surface electrodes 222a and a right end of one of the second back surface electrodes 222b.

That is, one of the plurality of second electrodes 222a and 222b may be formed by short-circuiting the second front surface electrode 222a and the second back surface electrode 222b.

Further, one end of each of the plurality of second front surface electrodes 222a may be connected to a second wire portion 242, and a signal by touch may be transmitted from each of the second front surface electrode 222a to the second wire portion 242.

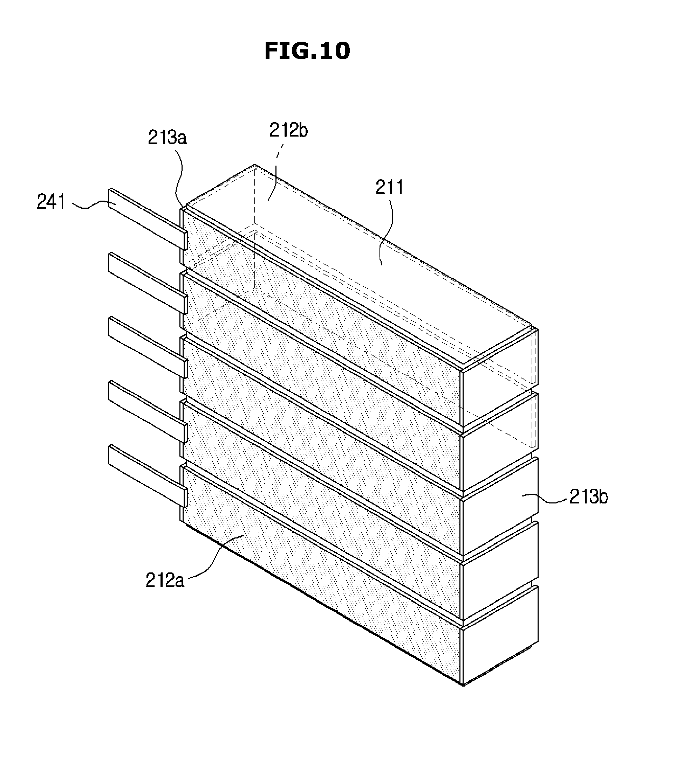

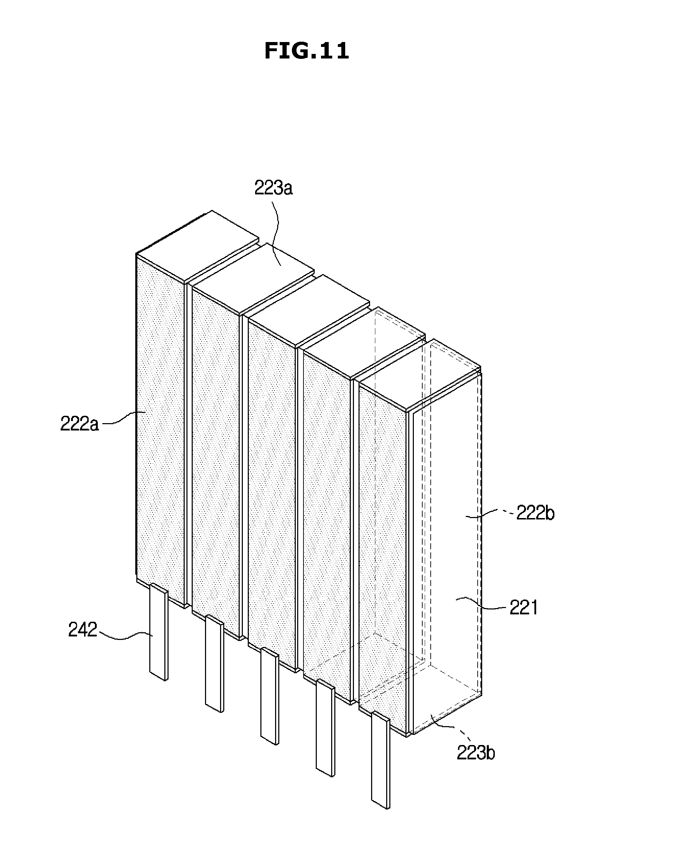

FIG. 10 illustrates an example of a first pattern portion 210 having a stripe shape, and FIG. 11 illustrates an example of a second pattern portion 220 having a stripe shape.

As shown in FIG. 10, a first electrode portion 212 of a first pattern portion 210 may include first front surface electrodes 212a arranged to be spaced apart by a predetermined distance on a front side of the first film portion 211 and having a stripe shape, and first back surface electrodes 212b arranged to be spaced apart by a predetermined distance on the back side of the first film portion 211 and having a stripe shape.

The first front surface electrode 212a and the first back surface electrode 212b of the first electrode portion may have the first film portion 211 arranged therebetween, be arranged to face each other, and be arranged in a first direction. Here, the first direction may be a direction of an X axis as shown in FIG. 5.

The first connection portion 213 may connect the plurality of first front surface electrodes 212a and the plurality of first back surface electrodes 212b and connect the first front surface electrodes 212a and the first back surface electrodes 212b which are arranged to face each other.

In the exemplary embodiment, one of the first connection portion 213 may short-circuit the first front surface electrode 212a and the first back surface electrode 212b by connecting a left end of one of the first front surface electrodes 212a and a left end of one of the first back surface electrodes 212b, and connecting a right end of one of the first front surface electrodes 212a and a right end of one of the first back surface electrodes 212b.

Further, a first wire portion 241 may be connected to a left end of each of the plurality of first front surface electrode 212a, and a signal having a predetermined voltage may be applied to each of the plurality of first front surface electrodes 212a.

As shown in FIG. 11, a second electrode portion 222 of the second pattern portion 220 may include a plurality of second electrodes 222 having second front surface electrodes 222a arranged to be spaced apart by a predetermined distance on a front surface of the second film portion 221 and having a stripe shape, and a plurality of second back surface electrodes 222b arranged to be spaced apart by a predetermined distance on the back side of the second film portion 221 and having a stripe shape. a second front surface electrode 222a of the plurality of second front electrodes 222a and a second back surface electrode 222b of plurality of second back electrodes 222b of the second electrode portion 220 may have the second film portion 221 arranged therebetween, be arranged to face each other, and be arranged in a second direction.

Here, the second direction may be a direction of a Y axis as shown in FIG. 5.

The second connection portion 223 may connect the plurality of second front surface electrodes 222a and the plurality of second back surface electrodes 222b and connect the second front surface electrodes 222a and the second back surface electrodes 222b which are arranged to face each other.

In the exemplary embodiment, one of the second connection portion 223 may short-circuit the second front surface electrode 222a and the second back surface electrode 222b by connecting a left end of one of the second front surface electrodes 222a and a left end of one of the second back surface electrodes 222b, and connecting a right end of one of the second front surface electrodes 222a and a right end of one of the second back surface electrodes 222b.

Further, the second wire portion 242 may be connected to one end of each of the plurality of second front surface electrodes 222a, and a signal by touch may be transmitted from the second front surface electrode 222a to the second wire portion 242.

Here, the first electrode 212 of the first electrode portion 210 and the second electrode 222 of the second electrode portion 220 may be patterned by exposure and development.

The first electrode 212 of the first pattern portion 210 and the second electrode 222 of the second pattern portion 220 may be formed of one or more types selected from materials consisting of conductive polymers such as indium tin oxide (ITO), indium zinc oxide (IZO), indium tin zinc oxide (ITZO), antimony tin oxide (ATO), aluminum-doped zinc oxide (AZO), carbon nanotube, poly(3,4-ethylenedioxythiophene) (PEDOT).

A method of forming the first electrode 212 of the first pattern portion 210 and the second electrode 222 of the second pattern portion 220 may be a sputtering method, a chemical vapor deposition (CVD) method, an ion plating method, etc., and at this time, a mask, etc., may be used.

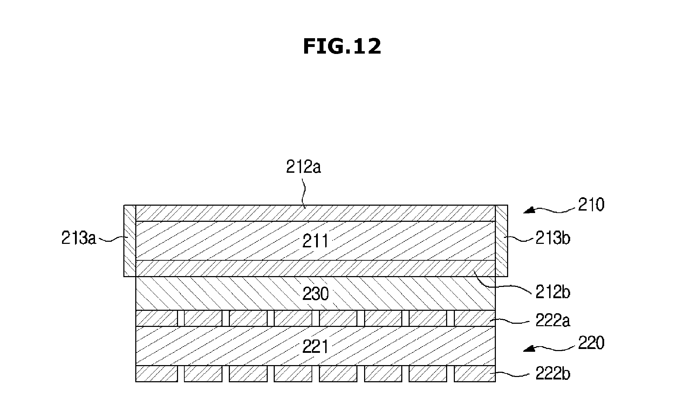

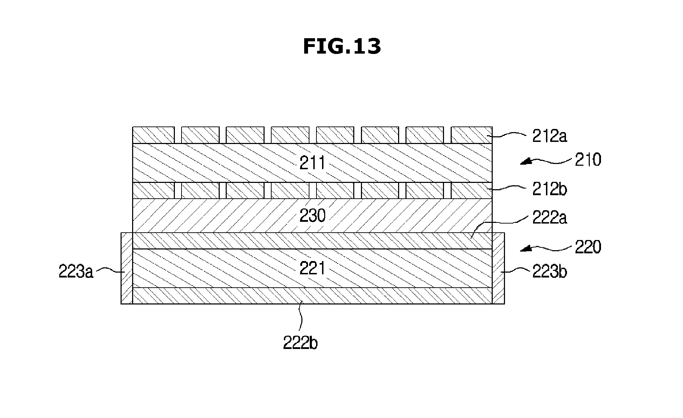

FIG. 12 is a cross-sectional view taken along line X of a touch panel shown in FIG. 5, FIG. 13 is a cross-sectional view taken along line Y of a touch panel shown in FIG. 5, and FIGS. 12 and 13 are cross-sectional views of a touch panel having a first electrode and a second electrode of a stripe shape.

A plurality of first front surface electrodes 212a may be arranged on a front surface of the first film portion 211, a plurality of first back surface electrodes 212b may be arranged on the back surface of the first film portion 211, a plurality of first left end connection portions 213a may be arranged on a left side of the first film portion 211, and a plurality of first right end connection portions 213b may be arranged on a right side of the first film portion 211.

In the exemplary embodiment, the plurality of first front surface electrodes 212a and the plurality of first back surface electrodes 212b which are arranged on both sides, that is, surfaces facing each other, of the first film portion 211 may be arranged to be spaced apart by a predetermined distance, and be arranged at positions facing each other.

A plurality of second front surface electrodes 222a may be arranged on the front surface of the second film portion 221, a plurality of second back surface electrodes 222b may be arranged on the back surface of the second film portion 221, a plurality of second left end connection portions 223a may be arranged on a left side of the second film portion 221, and a plurality of second right end connection portions 223b may be arranged on a right side of the second film portion 221.

Here, the plurality of second front surface electrodes 222a and the plurality of second back surface electrodes 222b which are arranged on both sides, that is, surfaces facing each other, of the second film portion 221 may be arranged to spaced apart by a predetermined distance, and be arranged at positions facing each other.

Further, both sides of the first film portion 211 on which the first connection portion 213 is arranged and both sides of the second film portion 221 on which the second connection portion 223 is arranged may have arrangement directions different from each other based on an upper surface of the touch panel 200.

For example, supposing that the touch panel 200 has a rectangular shape, the second connection portions 223a and 223b of the second film portion 221 may be arranged on a third side of the touch panel and a fourth side facing the third side when the first connection portions 213a and 213b of the first film portion 211 are arranged on a first side of the touch panel and a second side facing the first side.

The first electrode 212 of the plurality of first front surface electrode 212a and the first back surface electrode 212b may be short-circuited by connecting the first front surface electrode 212a and the first back surface electrode 212b in which the first film portion is arranged therebetween by the first connection portion 213.

Further, the second electrode 222 of the plurality of the second front surface electrode 222a and the second back surface electrode 222b may be short-circuited by connecting the second front surface electrode 222a and the second back surface electrode 222b having the first film portion 221 arranged therebetween and arranged at positions facing each other by the second connection portion 223.

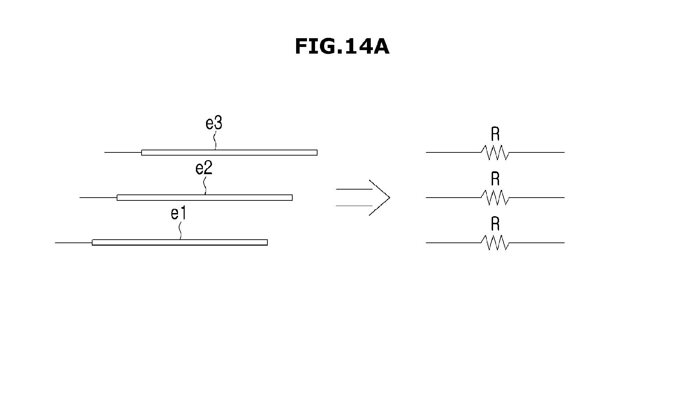

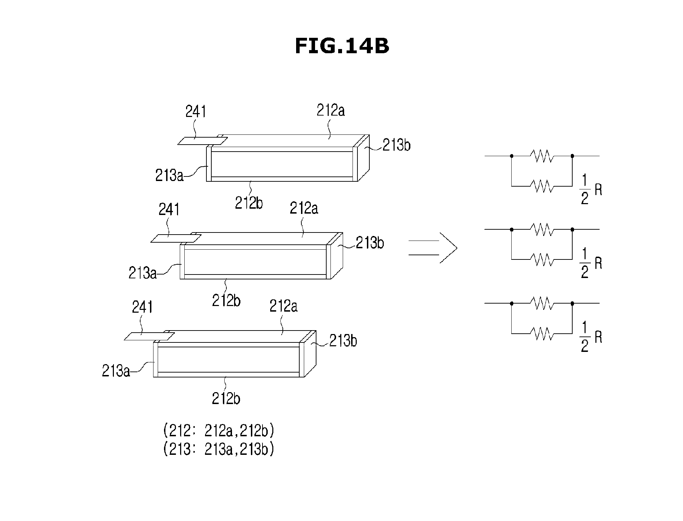

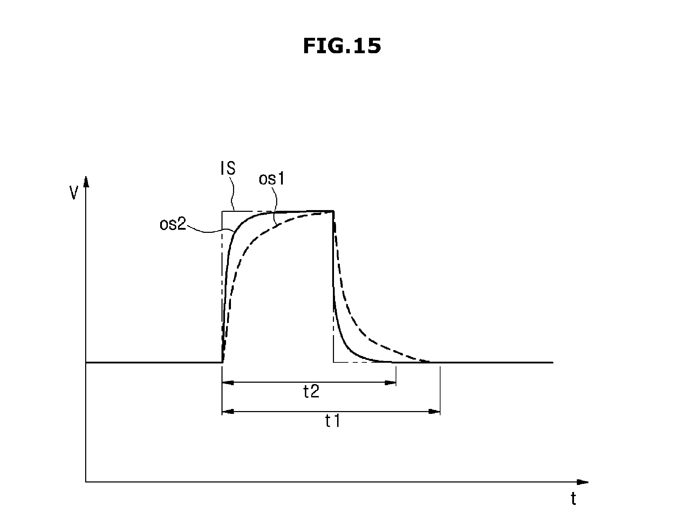

That is, a response speed with respect to touch may be improved because the plurality of first electrodes of the first pattern portion 210 and the plurality of second electrodes of the second pattern portion 220 are short-circuited. This will be described with reference to FIGS. 14A, 14B and 15.

FIGS. 14A, 14B and 15 are diagrams for describing a response speed of a touch panel according to an exemplary embodiment.

As shown in FIG. 14A, a touch panel of the related art may have features in which a plurality of first electrodes e1, e2, and e3 are arranged on one surface of the first film portion and a second electrode is arranged on only one surface of the second film portion. Accordingly, a resistance component R with respect to the plurality of first electrodes e1, e2, and e3 may be generated, a resistance component with respect to the second electrode may be generated, and a capacitance may be generated between each of the plurality of first electrodes and each of the plurality of second electrodes.

As shown in FIG. 15, the touch panel of the related art may generate an RC delay by the resistance component of the first electrode and the second electrode and the capacitance between the first electrode and the second electrode when an input signal IS is input to the first electrodes e1, e2, and e3 of the first pattern portion, and thus a first signal OS1 delayed by a first time t1 may be output from the second electrode of the second pattern portion.

However, as shown in FIG. 14B, the plurality of first electrode portions 212 arranged on the both surfaces of the first film portion may be short-circuited by the first connection portion 213 and have a parallel connection structure.

The plurality of second electrodes 222 arranged on both surfaces of the second film portion 221 may be also short-circuited by the second connection portion 223 and have a parallel connection structure.

The short-circuited first electrode and the short-circuited second electrode may have the resistance component 2/R reduced to half.

As shown in FIG. 15, the RC delay may be generated by the resistance component of the first electrode and the second electrode and the capacitance between the first electrode and the second electrode may be generated when the input signal IS is input to the first electrode of the first pattern portion, but the RC delay in which the delay time is reduced by reduction of the resistance component may be generated, and thus a signal OS2 delayed by a second time t2 may be output from the second electrode of the second pattern portion.

The RC delay may be reduced by reducing the resistance component of the first electrode 212 and the second electrode 22 in half, a driving frequency may be prevented from being reduced, a touch scan time may be decreased according to the reduction of the RC delay, and a response speed by the touch may be improved.

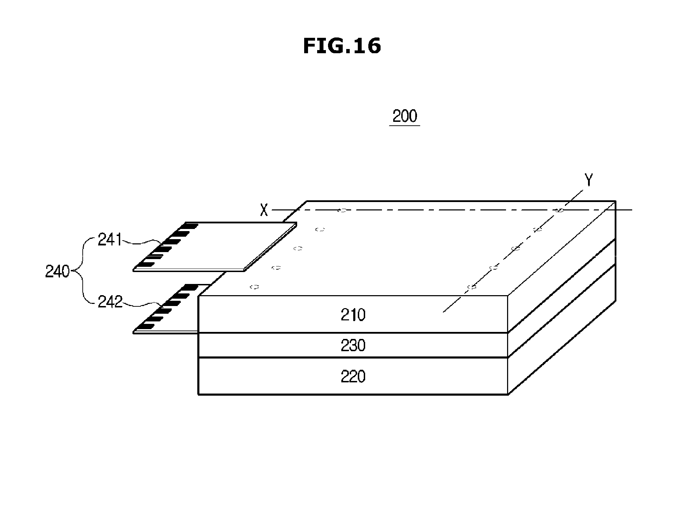

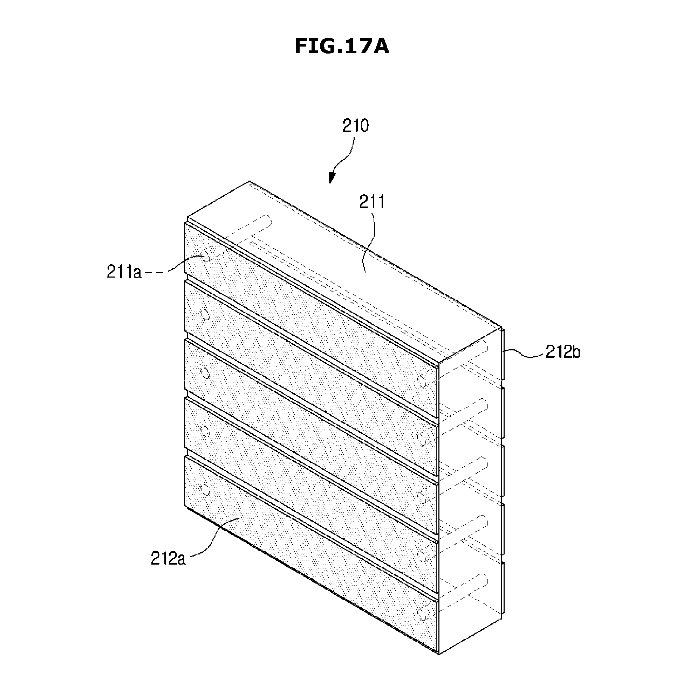

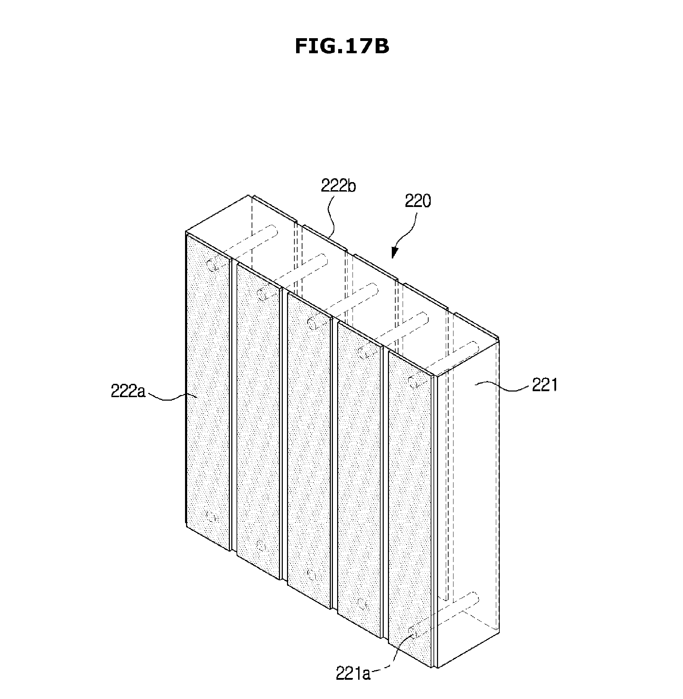

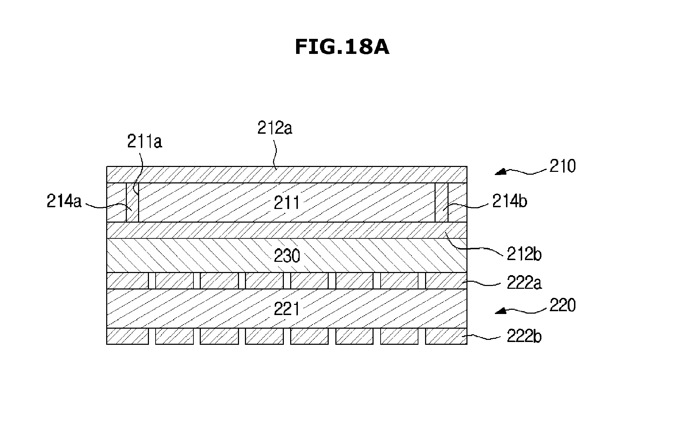

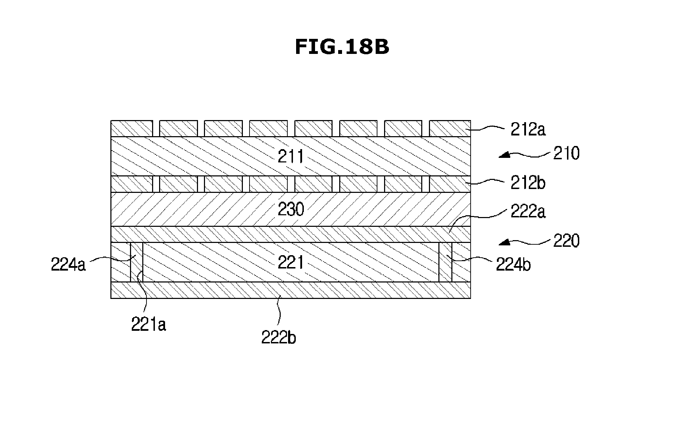

FIG. 16 is a diagram illustrating a touch panel according to an exemplary embodiment, FIGS. 17A and 17B are detailed diagrams illustrating shapes of a first pattern portion 210 and a second pattern portion 220 of a touch panel shown in FIG. 16, and FIGS. 18A and 18B are cross-sectional views of a touch panel shown in FIG. 16.

An example of the touch panel having the first electrode 212 and the second electrode 222 of a stripe shape will be described as an exemplary embodiment.

As shown in FIG. 16, the touch panel 200 may include a first pattern portion 210, a second pattern portion 220, an insulating portion 230, and a wire portion 240.

The first pattern portion 210 may include a plurality of first electrodes 212a and 212b arranged in the first direction and arranged to be spaced apart by a predetermined distance, and the second pattern portion 220 may include a plurality of second electrodes 222a and 222b arranged in the second direction and arranged to be spaced apart by a predetermined distance.

In the exemplary embodiment, any one group of the first electrodes and the second electrodes may be a driving electrode to which a predetermined voltage is applied, and the other may be a sensing electrode outputting a voltage signal corresponding to whether the touch panel is touched.

The first direction may be an X direction, the second direction may be a Y direction, and the first direction and the second direction may be a direction intersecting each other.

The insulating portion 230 may be formed of a transparent material, be arranged between the first pattern portion 210 and the second pattern portion 220, bond the second pattern portion 220 to the first pattern portion 210, and insulate the first pattern portion 210 and the second pattern portion 220.

The touch panel 200 may include a wire portion 240 applying a signal of a predetermined voltage to the first electrode, and sensing a signal of a voltage changed in the second electrode.

The wire portion 240 may include a first wire portion 241 connected to the first electrode 212 of the first pattern portion 210, and a second wire portion 242 connected to the second electrode 222 of the second pattern portion 220.

In the exemplary embodiment, each of the first wire portion 241 and the second wire portion 242 may include a flexible printed circuit board (FPCB).

As shown in FIG. 17A, the first pattern portion 210 may include a first film portion 211 having a plurality of first holes 211a arranged to be spaced apart by a predetermined distance, and a plurality of first electrodes 212a and 212b arranged on the first film portion 211 and arranged at positions corresponding to those of the plurality of first holes.

Here, a plurality of first holes 211a may be formed at positions adjacent to a first side and a second side of the first film portion 211. Further, a pair of first holes may be arranged with respect to one first electrode.

The first side and the second side of the first film portion 211 may be surfaces facing each other.

The plurality of first electrodes 212a and 212b of the first electrode portion 212 may include a plurality of first front surface electrode 212a arranged in a first direction on the front surface of the first film portion 211, and a plurality of first back surface electrodes 212b arranged in a second direction on the back side of the first film portion 211.

The plurality of first front surface electrode 212a and the plurality of first back surface electrodes 212b may be arranged to face each other.

Here, the back side of the first film portion 211 may be the back side of the front surface of the first film portion 211, and be a surface facing the front surface of the first film portion 211.

A first wire portion 241 may be connected to the first front surface electrode 212a and the first back surface electrode 212b of the first electrode portion 212.

The first pattern portion 210 may further include a plurality of first connection portions 214a and 214b provided inside each of the plurality of holes 211a, and connecting the first front surface electrodes 212a and the first back surface electrodes 212b of the first electrode portion 212.

Here, the connecting of the first front surface electrode 212a and the first back surface electrode 212b of the first electrode portion 212 may include electrically connecting the first front surface electrode 212a and the first back surface electrode 212b.

The plurality of first connection portions 214a and 214b may include a first left end connection portion 214a arranged in the first hole formed on the left side of the first film portion 211 and connecting a left end of the first front surface electrode 212a and a left end of the first back surface electrode 212b, and a first other end connection portion 214b arranged in the first hole formed in the second side of the first film portion 211 and connecting the other end of the first front surface electrode 212a and the other end of the first back surface electrode 212b.

As shown in FIG. 17B, the second pattern portion 220 may include a second film portion 221 having a plurality of second holes 221a arranged to be spaced apart by a predetermined distance, and a second electrode portion 222 having a plurality of second electrodes arranged on the second film portion 221 and arranged at positions corresponding to those of the plurality of second holes 221a.

Here, the plurality of second holes 221a may be formed at positions adjacent to the first side portion and the second side portion of the second film portion 221. The first side portion and the second side portion of the second film portion 221 may be surfaces facing each other.

The plurality of first electrodes of the second electrode portion 222 may include a plurality of second front surface electrodes 222a arranged in a second direction on a front surface of the second film portion 221, and a plurality of second back surface electrodes 222b arranged in the second direction on the back side of the second film portion 221.

The plurality of second front surface electrodes 222a and the plurality of second back surface electrodes 222b may be arranged to face each other.

Here, the back side of the second film portion 221 may be a side facing the front surface of the second film portion 221.

A second wire portion 242 may be connected to the second front surface electrode 222a and the second back surface electrode 222b of the second electrode portion 222.

The second pattern portion 220 may further include a plurality of second connection portions 223 provided inside a plurality of second holes 221a, and connecting the second front surface electrodes 222a and the second back surface electrodes 222b of the second gap portion 420.

The second connection portion 223 may include a second one end connection portion 224a arranged inside a second hole formed on a first side of the second film portion 221 and electrically connecting one end of the second front surface electrode 222a and one end of the second back surface electrode 222b, and a second other end connection portion 224b arranged inside a second hole formed on a second side of the second film portion 221 and electrically connecting the other end of the second front surface electrode 222a and the other end of the second back surface electrode 222b.

Here, the first direction in which the first electrode of the first electrode portion 212 is arranged and the second direction in which the second electrode of the second electrode portion 222 may be directions intersecting each other. That is, the plurality of first electrodes of the first electrode portion and the plurality of second electrodes of the second electrode portion may be arranged in directions intersecting each other.

As shown in FIGS. 18A and 18B, the plurality of first front surface electrodes 212a may be arranged on the front surfaces of the first film portion 211, the plurality of first back surface electrodes 212b may be arranged on the back side of the first film portion 211, the plurality of first one end connection portions 213a may be arranged in the first hole of the first side of the first film portion 211, and the plurality of first other end connection portions 213b may be arranged in the first hole of the second side of the first film portion 211.

Here, the plurality of first front surface electrodes 212a and the plurality of first back surface electrodes 212b which are arranged the both surfaces, that is, surfaces facing each other, of the first film portion 211 may be arranged to be spaced apart by a predetermined distance, arranged at positions facing each other, and be electrically connected by the first hole 211a.

The plurality of second front surface electrodes 222a may be arranged on the front surface of the second film portion 221, the plurality of second back surface electrodes 222b may be arranged on the back side of the second film portion 221, the plurality of second one end connection portions 223a may be arranged in the second hole of the first side of the second film portion 221, and the plurality of second other end connection portions 223b may be arranged in the second hole of the second side of the second film portion 221.

Here, both surfaces, that is, the plurality of second front surface electrodes 222a and the plurality of second back surface electrodes 222b which are arranged on surfaces facing each other, of the second film portion 221 may be arranged to be spaced apart by a predetermined distance, arranged at positions facing each other, and electrically connected by the second hole 221a.

Further, both surfaces of the first film portion 211 in which the first connection portion 213 is arranged and both surfaces of the second film portion 221 in which the second connection portion 223 is arranged may have arrangement directions different from each other based on the upper surface of the touch panel 200.

Accordingly, the first electrode forming the first front surface electrode 212a and the first back surface electrode 212b may be short-circuited by connecting the first front surface electrode 212a and the first back surface electrode 212b which have the first film portion 211 arranged therebetween and are arranged at positions facing each other by the first connection portion 213.

Further, the second electrode forming the second front surface electrode 222a and the second back surface electrode 222b may be short-circuited by connecting the second front surface electrode 222a and the second back surface electrode 222b which have the second film portion 221 arranged therebetween and are arranged at positions facing each other by the second connection portion 223.

That is, the resistance components having the first electrode and the second electrode may be reduced, and the response speed with respect to touch may be increased by short-circuiting the plurality of first electrodes of the first pattern portion 210 and the plurality of second electrodes of the second pattern portion 220.

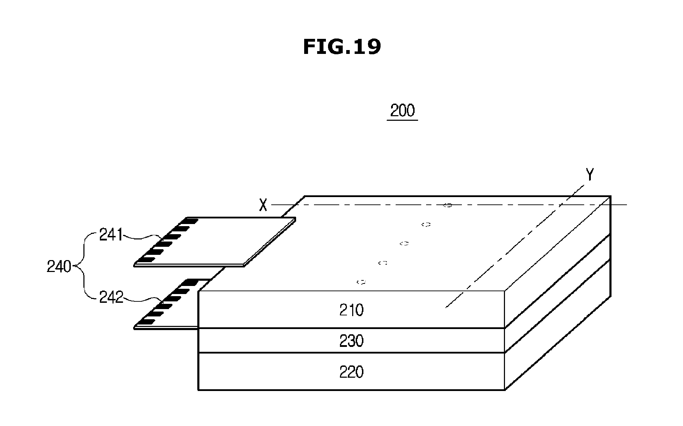

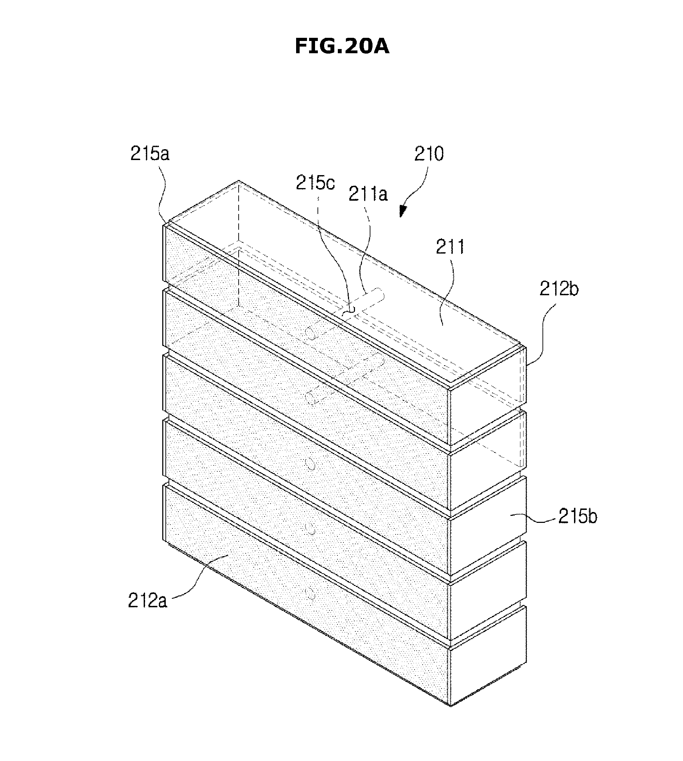

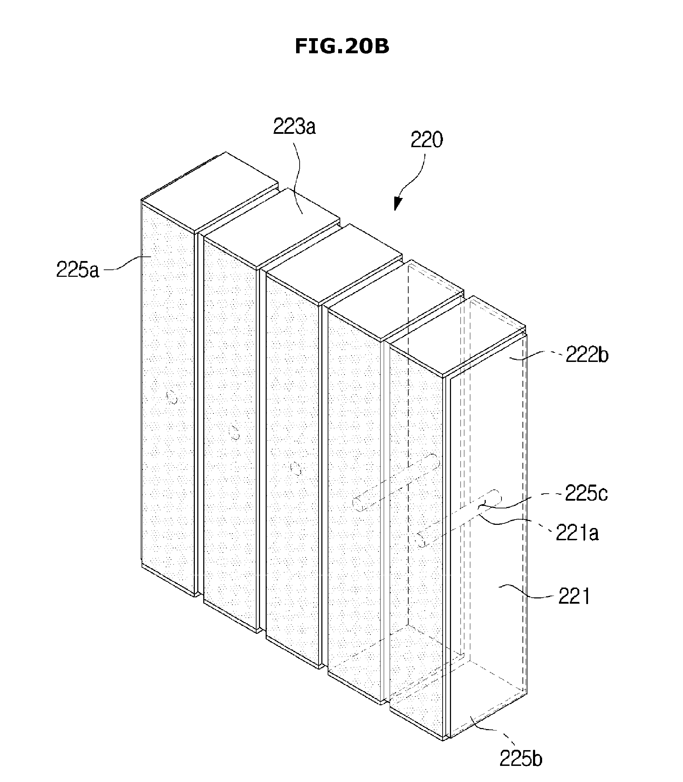

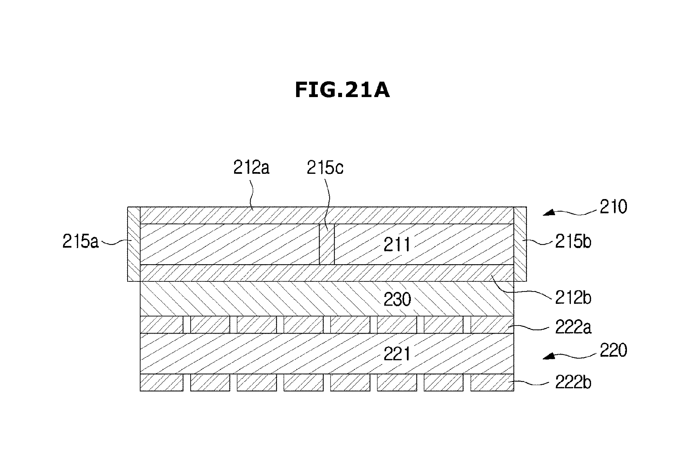

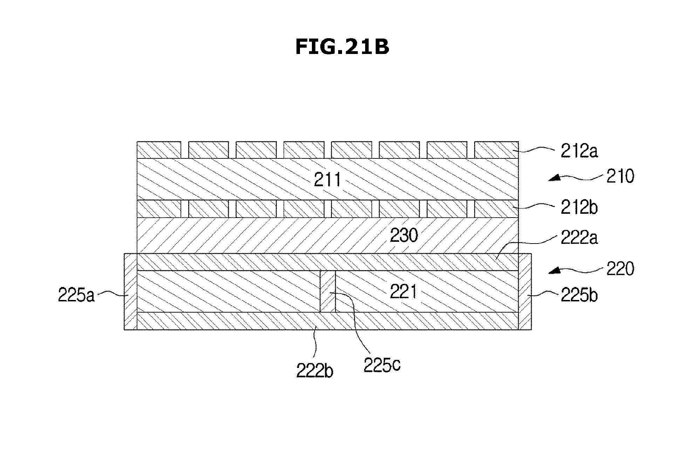

FIG. 19 illustrates a touch panel according to an exemplary embodiment, FIGS. 20A and 20B are detailed diagrams illustrating a first pattern portion 210 and a second pattern portion 220 of a touch panel shown in FIG. 19, and FIGS. 21A and 21B are cross-sectional views of a touch panel shown in FIG. 19.

The touch panel having the first electrode and the second electrode of a stripe shape will be described as still another embodiment.

As shown in FIG. 19, the touch panel 200 may include a first pattern portion 210, a second pattern portion 220, an insulating portion 230, and a wire portion 240.

Because the insulating portion 230 and the wire portion 240 according to an exemplary embodiment are equal to the insulating portion 230 and the wire portion 240 of one embodiment, detailed description thereof will be omitted.

The first pattern portion 210 may include a plurality of first electrodes arranged in a first direction and arranged to be spaced apart by a predetermined distance, and the second pattern portion 220 may include a plurality of second electrodes arranged in a second direction and arranged to be spaced apart by a predetermined distance.

More particularly, as shown in FIG. 20A, the first pattern portion 210 may include a first film portion 211 having a plurality of first holes 211a arranged to be spaced apart by a predetermined distance, and a first electrode portion 212 having a plurality of first electrodes arranged on the first film portion 211 and arranged at positions corresponding to those of the plurality of first holes.

Here, the plurality of first holes 211a may be formed at a center position of the first film portion 211.

The plurality of first electrodes of the first electrode portion 212 may include a plurality of first front surface electrodes 212a arranged in a first direction on one side of the first film portion 211, and a plurality of first back surface electrodes 212b arranged in the first direction on the back side of the first film portion 211.

The plurality of first front surface electrodes 212a and the plurality of first back surface electrodes 212b may be arranged at positions facing each other.

Here, the back surface of the first film portion 211 may be a back side of the front surface of the first film portion 211, and be a surface facing the front surface of the first film portion 211.

A first wire portion 241 may be connected to the first front surface electrode 212a and the first back surface electrode 212b of the first electrode portion 212.

The first pattern portion 210 may further include a first connection portion 215 connecting the first front surface electrode 212a and the first back surface electrode 212b of the first electrode portion 212.

The first connection portion 215 may include a first one end connection portion 215a arranged on a first side of the first film portion 211 and electrically connecting one end of the first front surface electrode 212a and one end of the first back surface electrode 212b, a first other end connection portion 215b arranged on a second side of the first film portion 211 and electrically connecting the other end of the first front surface electrode 212a and the other end of the first back surface electrode 212b, and a first center connection portion 215c arranged inside the first hole 211a and electrically connecting a center portion of the first front surface electrode 212a and a center portion of the first back surface electrode 212b.

Here, the first side of the film portion may be a surface facing the second side. Further, the first wire portion 241 may be connected to the first one end connection portion 215a or the first other end connection portion 215b.

As shown in FIG. 20B, the second pattern portion 220 may include a second film portion 221 having a plurality of second holes 221a arranged to be spaced apart by a predetermined distance, and a second electrode portion 222 having a plurality of second electrodes arranged on the second film portion 221 and arranged at positions corresponding to those of the plurality of second holes.

Here, the plurality of second holes 221a may be formed at a center portion of the second film portion 221.

The plurality of second electrodes of the second electrode portion 222 may include a plurality of second front surface electrodes 222a arranged in a second direction on front surface of the second film portion 221, and a plurality of back surface electrodes 222b arranged in the second direction on the back side of the second film portion 221.

The plurality of second front surface electrodes 222a and the plurality of second back surface electrodes 222b may be arranged to face each other.

Here, the back surface of the second film portion 221 may be a back side of the front surface of the second film portion 221, and be a surface facing the front surface of the second film portion 221.

A second wire portion 242 may be connected to the second front surface electrode 222a and the second back surface electrode 222b of the second electrode portion 222.

The second pattern portion 220 may further include a second connection portion 225 connecting the second front surface electrode 222a and the second back surface electrode 222b of the second electrode portion 222.

The second connection portion 225 may include a second connection portion 225a arranged on a first side of the second film portion 221 and electrically connecting one end of the second front surface electrode 222a and one end of the second back surface electrode 222b, a second other end connection portion 225b arranged on a second side of the second film portion 221 and electrically connecting the other end of the second front surface electrode 222a and the other end of the second back surface electrode 222b, and a second center connection portion 225c arranged inside the second hole 221a and electrically connecting a center portion of the second front surface electrode 222a and a center portion of the second back surface electrode 222b.

Here, the first side of the second film portion may be a surface facing the second side.

Further, the second wire portion 242 may be connected to the second one end connection portion 225a or the first other end connection portion 215b.

As shown in FIGS. 21A and 21B, the plurality of first front surface electrodes 212a may be arranged on front surface of the first film portion 211, the plurality of first back surface electrodes 212b may be arranged on the back side of the first film portion 211, the plurality of first one end connection portions 215a may be arranged on the first side of the first film portion 211, the plurality of first other end connection portions 215b may be arranged on the second side of the first film portion 211, and the plurality of center connection portions 215c may be arranged at the center portion of the first film portion 211.

The plurality of first front surface electrodes 212a and the plurality of first back surface electrodes 212b which are arranged on the first film portion 211 may be electrically connected by the first one end connection portion 215a, the first other end connection portion 215b, and the first center connection portion 215c. Accordingly, the first electrode forming the first front surface electrode 212a and the first back surface electrode 212b may be short-circuited.

The plurality of second front surface electrodes 222a may be arranged on the front surface of the second film portion 221, the plurality of second back surface electrodes 222b may be arranged on the back side of the second film portion 221, the plurality of second one end connection portions 225a may be arranged on the first side of the second film portion 221, the plurality of second other end connection portions 225b may be arranged on the second side of the second film portion 221, and the plurality of second center connection portions 225c may be arranged at the center portion of the second film portion 221.

The plurality of second front surface electrodes 222a and the plurality of second back surface electrodes 222b which are arranged on the second film portion 221 may be electrically connected by the second one end connection portion 225a, the second other end connection portion 225b, and the second center connection portion 225c. Accordingly, the second electrode forming the second front surface electrode 222a and the second back surface electrode 222b may be short-circuited.

Both sides of the first film portion 211 on which the first connection portion 215 is arranged and both sides of the second film portion 221 on which the second connection portion 225 is arranged may have arrangement directions different from each other based on an upper surface of the touch panel 200.

The first electrode forming the first front surface electrode 212a and the first back surface electrode 212b may be short-circuited by connecting the first front surface electrode 212a and the first back surface electrode 212b which have the first film portion 211 arranged therebetween and arranged at positions facing each other by the first connection portion 214.

That is, resistance components in which the first electrode and the second electrode have may be reduced, and a response speed with respect to touch may be increased by making so that the plurality of first electrodes of the first pattern portion 210 and the plurality of second electrodes of the second pattern portion 220 are short-circuited.

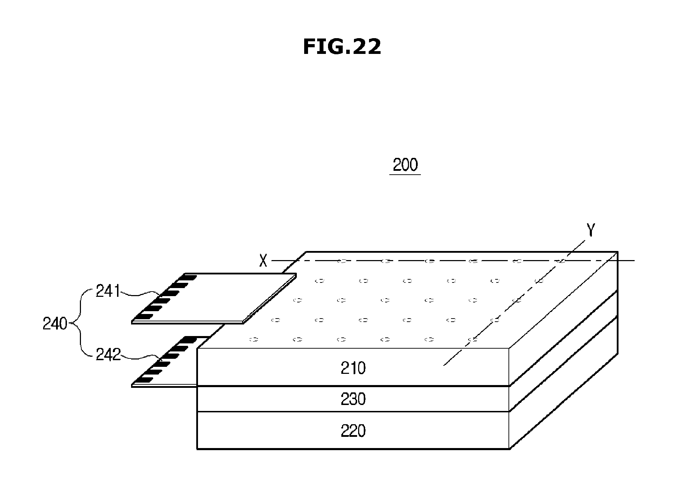

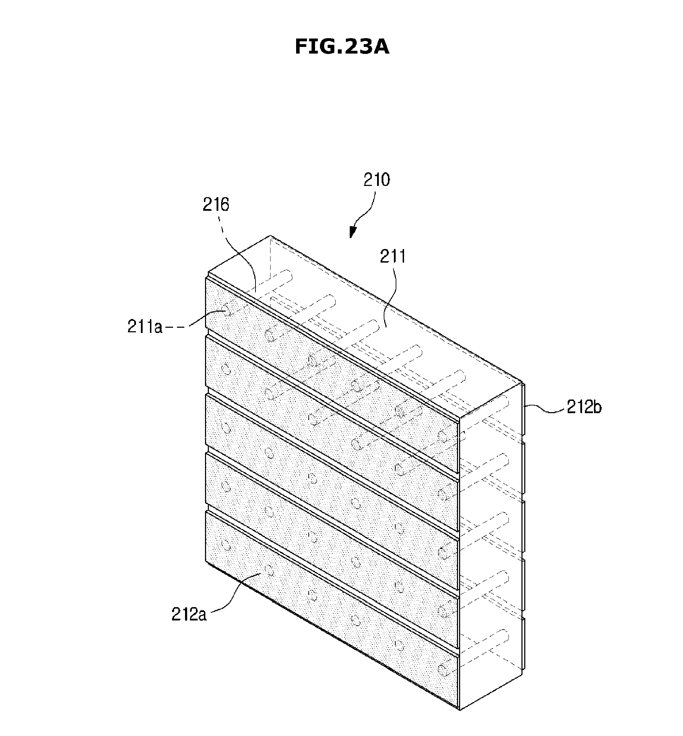

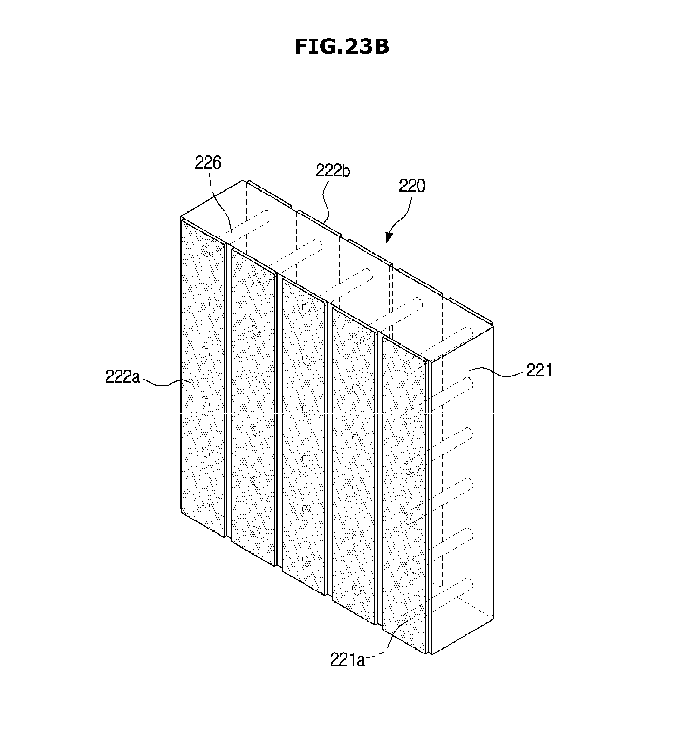

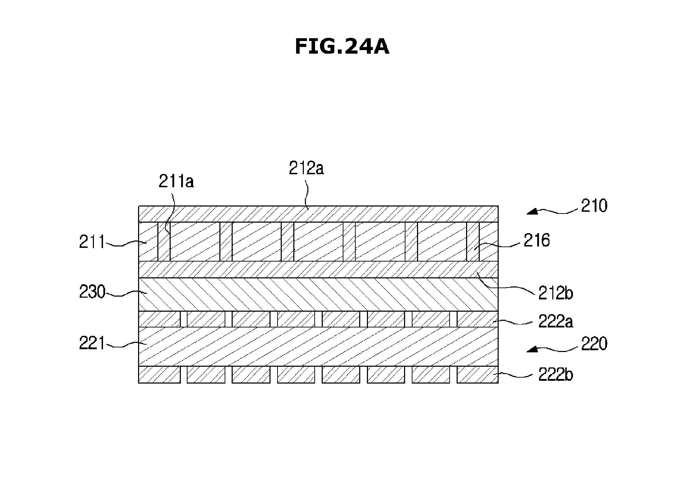

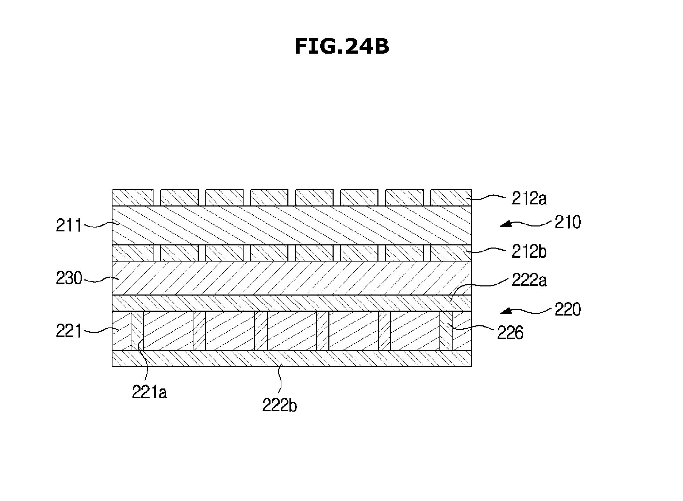

FIG. 22 illustrates a touch panel according to an exemplary embodiment, FIGS. 23A and 23B are diagrams illustrating a first pattern portion 210 and a second pattern portion 220 of a touch panel shown in FIG. 22, and FIGS. 24A and 24B are cross-sectional views of a touch panel shown in FIG. 22.

A touch panel having a first electrode and a second electrode of a stripe shape will be described as an exemplary embodiment.

As shown in FIG. 22, the touch panel 200 may include a first pattern portion 210, a second pattern portion 220, an insulating portion 230, and a wire portion 240.

Because the insulating portion 230 and the wire portion 240 according to an exemplary embodiment are equal to the insulating portion 230 and the wire portion 240 according to one embodiment, detailed description thereof will be omitted.

The first pattern portion 210 may include a first electrode portion having a plurality of first electrodes arranged in a first direction and arranged to be spaced apart by a predetermined distance, and the second pattern portion 220 may include a second electrode portion having a plurality of second electrodes arranged in a second direction and arranged to be spaced apart by a predetermined distance.

Here, the plurality of first electrodes of the first electrode portion may be arranged on the plurality of first holes arranged to be spaced apart by a predetermined distance, and the plurality of second electrodes of the second electrode portion may be arranged on the plurality of second holes arranged to be spaced apart by a predetermined distance. This will be described with reference to FIGS. 22A, 22B, 23A, and 23B.

As shown in FIG. 23A, the first pattern portion 210 may include a first pattern portion 210 having a plurality of holes 211a arranged in a plurality of rows, and a first electrode portion 212 arranged on the first film portion 211 and having a plurality of first electrodes arranged at positions corresponding to those of the plurality of first holes.

The plurality of holes arranged to be spaced apart by a predetermined distance may be formed at one row of the first film portion, and one of the first electrodes may be arranged at one row.

The plurality of first electrodes of the first electrode portion 212 may include a plurality of first front surface electrodes 212a arranged in a first direction on the front surface of the first film portion 211, and a plurality of first back surface electrodes 212b arranged in the first direction on the back surface of the first film portion 211.

The plurality of first front surface electrodes 212a and the plurality of first back surface electrodes may be arranged to face each other.

A first wire portion 241 may be connected to the first front surface electrode 212a and the first back surface electrode 212b of the first electrode portion 212.

The first pattern portion 210 may be provided inside the plurality of first holes 211a, and further include a plurality of first connection portions 216 connecting the first front surface electrodes 212a and the back surface electrodes 212b of the first electrode portion 212.

As shown in FIG. 23B, the second pattern portion 220 may include a second film portion 221 having a second hole 221a arranged in a plurality of rows, and a second electrode portion 222 arranged on the second film portion 221 and having a plurality of second electrodes arranged at positions corresponding to those of the plurality of second holes.

The plurality of second holes arranged to be spaced apart by a predetermined distance may be formed at one column of the second film portion, and one of the second electrodes may be arranged at one column.

The plurality of second electrodes of the second electrode portion 222 may include a plurality of second front surface electrodes 222a arranged in a second direction on the front surface of the second film portion 221, and a plurality of second back surface electrodes 222b arranged in the second direction on the back surface of the second film portion 221.

The plurality of second front surface electrodes 222a and the plurality of second back surface electrodes 222b may be arranged to face each other.

A second wire portion 242 may be connected to the second front surface electrode 222a and the second back surface electrode 222b of the second electrode portion 222.

The second pattern portion 220 may be provided inside the plurality of second holes 221a, and further include a plurality of second connection portions 226 connecting the second front surface electrodes 222a and the second back surface electrodes 222b of the second electrode portion 222.

Here, the first direction in which the first electrode of the first electrode portion 212 is arranged and the second direction in which the second electrode of the second electrode portion 222 is arranged may be directions intersecting each other. That is, the plurality of first electrodes of the first electrode portion and the plurality of second electrodes of the second electrode portion may be arranged to intersect each other.

As shown in FIGS. 23A and 23B, the plurality of first front surface electrodes 212a may be arranged on the front surface of the first film portion 211, the plurality of first back surface electrodes may be arranged on the back side of the first film portion 211, and the first connection portion 216 connecting the first front surface electrode 212a and the first back surface electrode 212b may be arranged in each of the plurality of first holes formed inside the first film portion 211.

The first electrode forming the first front surface electrode 212a and the first back surface electrode 212b may be short-circuited by connecting the first front surface electrode 212a and the first back surface electrode 212b which have the first film portion 211 arranged therebetween and are arranged at positions facing each other by the first connection portion 216.

The plurality of second front surface electrodes 222a may be arranged on the front surface of the second film portion 221, the plurality of second back surface electrodes 222b may be arranged on the back surface of the second film portion 221, and the second connection portion 226 which is electrically connecting the second front surface electrode 222a and the second back surface electrode 222b may be arranged in the plurality of second holes formed inside the second film portion 221.

The second electrode forming the second front surface electrode 222a and the second back surface electrode 222b may be short-circuited by connecting the second front surface electrode 222a and the second back surface electrode 222b which have the second film portion 221 arranged therebetween and are arranged to face each other by the second connection portion 226.

That is, resistance components having the first electrode and the second electrode may be reduced and a response speed with respect to touch may be increased by short-circuiting the plurality of first electrodes of the first pattern portion 210 and the plurality of second electrodes of the second pattern portion 220.

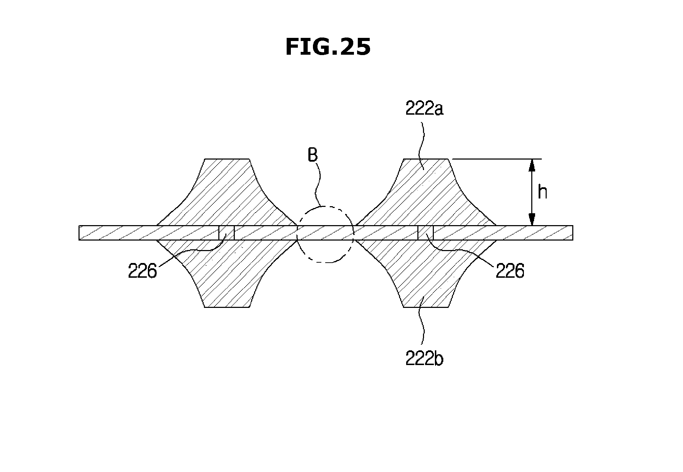

Further, etching defects between the electrodes may be prevented by short-circuiting the plurality of first electrodes of the first pattern portion 210 and the plurality of second electrodes of the second pattern portion 220. This will be described with reference to FIG. 25.

FIG. 25 is a cross-sectional view taken along line A of a second pattern portion.

Generally, when forming the second electrode, the second electrodes having a predetermined interval may be formed by etching a conductive material coated on the second film portion, a height h of the second electrode may be formed to be increased in order to increase a cross-sectional area of the second electrode in a convention art, and for this, the etching process may be performed after increasing a height of the conductive material coated on the second film portion, and thus the etching defects between the electrodes may be generated.

However, an exemplary embodiment may arrange the second electrodes on the both surfaces of the second film portion 221, and arrange so that the second electrodes arranged on the both surfaces through the second hole are formed to connect electrically. Accordingly, the cross-sectional area of the second electrode may be increased.

Accordingly, an exemplary embodiment may previously prevent the etching defects without increasing the height of the conductive material coated on the second film portion in order to form the second electrode.

An example of preventing the etching defects of the second electrode is described with reference to FIG. 25, but the same method may be applied to the first electrode.

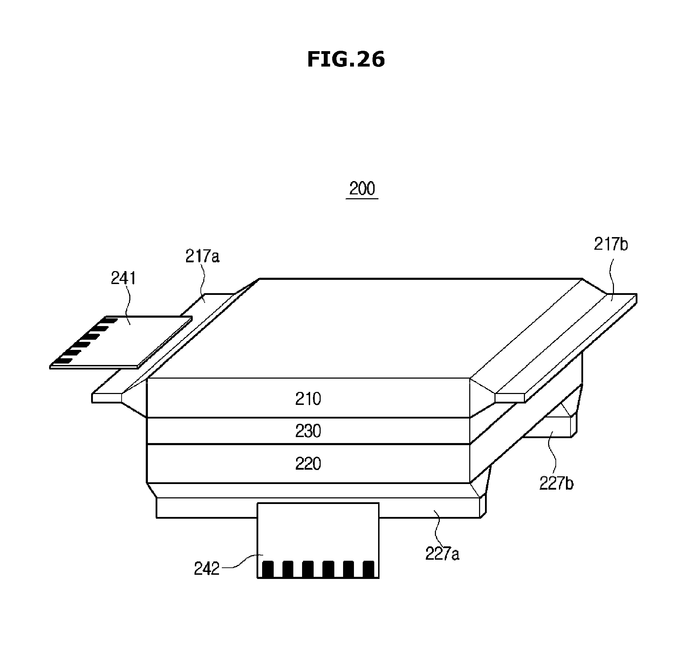

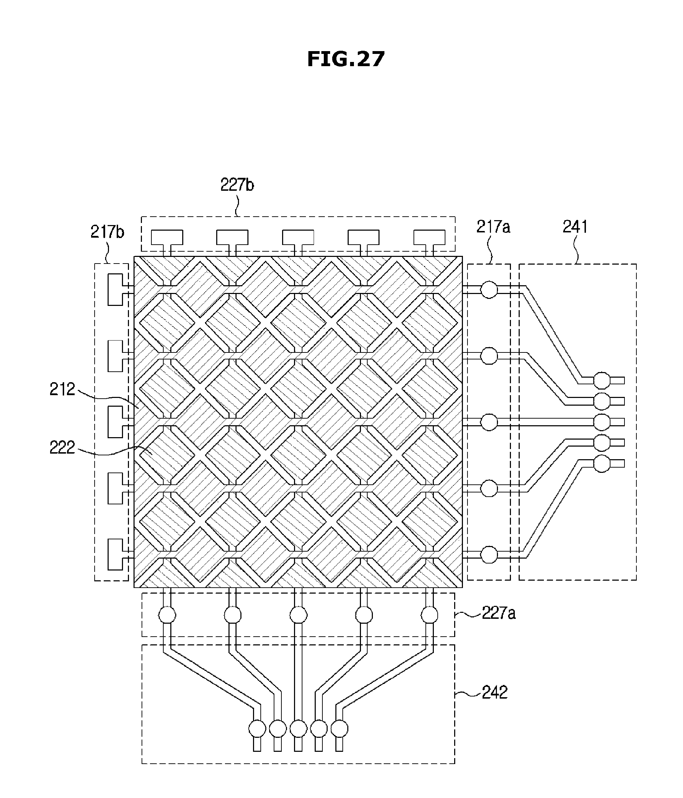

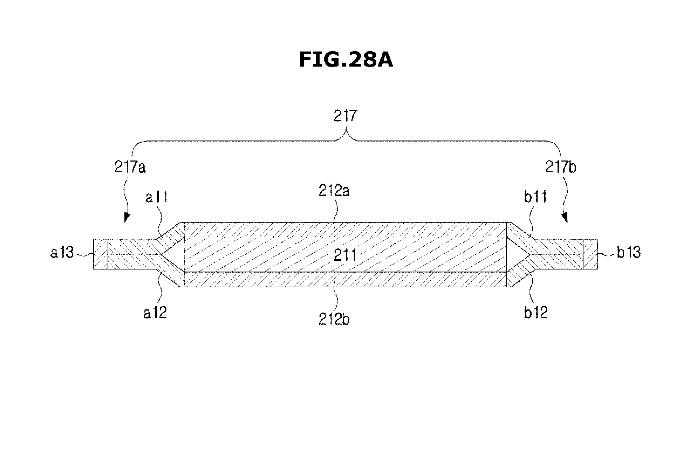

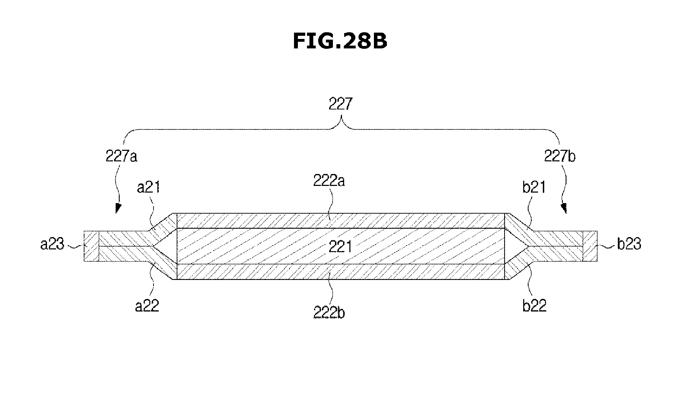

FIG. 26 illustrates a touch panel according to an exemplary embodiment, FIGS. 27A and 27B are diagrams illustrating a first pattern portion and a second pattern portion of a touch panel shown in FIG. 26, FIG. 28A is a diagram of a first pattern portion provided in a touch panel shown in FIG. 26, and FIG. 28B is a diagram of a second pattern portion provided in a touch panel shown in FIG. 26.

As shown in FIG. 26, a touch panel 200 according to an exemplary embodiment may include a first pattern portion 210, a second pattern portion 220, an insulating portion 230, and a wire portion 240.

Because the insulating portion 230 of the touch panel according to an exemplary embodiment is equal to the insulating portion 230 according to one embodiment, detailed description thereof will be omitted.

The first pattern portion 210 may include first connection portions 217a and 217b extending from both ends and the second pattern portion 220 may include second connection portions 227a and 227b extending from both ends.

A first wire portion 241 may be connected to any one of the first connection portions 217a and 217b, and a second wire portion 242 may be connected to any one of the second connection portions 227a and 227b.

As shown in FIG. 27, the first pattern portion 210 may include a first electrode portion 212 having a plurality of first electrodes arranged in a first direction, arranged to be spaced apart by a predetermined distance, and having diamond shapes, and the second pattern portion 220 may include a second electrode portion 222 having a plurality of second electrodes arranged in a second direction, arranged to be spaced apart by a predetermined distance, and having diamond shapes.

A first one end connection portion 217a may be connected to one end of each of the plurality of first electrodes of the first electrode portion 212, a first other end connection portion 217b may be connected to the other end of each of the plurality of first electrodes, a second one end connection portion 227a may be connected to one end of each of the plurality of second electrodes of the second electrode portion 222, and a second other end connection portion 227b may be connected to the other end of each of the plurality of second electrodes.

Further, a first wire portion 241 may be connected to the first one end connection portion 217a, and a second wire portion 242 may be connected to the second one end connection portion 272a.

More particularly, as shown in FIG. 28A, the first connection portion 217 may include a first one end connection portion 217a including a first one end extension portion a11 extending from one end of the first front surface electrode 212a arranged on the front surface of the first film portion, a second one end connection portion a12 extending from one end of the first back surface electrode 212b arranged on the back side of the first film portion, and a first connection extension portion a13 connecting the first one end extension portion a11 and the second one end extension portion a12 electrically.

Further, the first connection portion 217 may include a first other end connection portion 217b including a first other end extension portion b11 extending from the other end of the first front surface electrode 212a arranged on one side of the first film portion, a second other end extension portion b12 extending from the other end of the first back surface electrode 212b arranged on the back side of the first film portion, and a second connection extension portion b13 connecting the first other end extension portion b11 and the second other end extension portion b12 electrically.

As shown in FIG. 28B, the second connection portion 227 may include a second one end connection portion 227a including a second one end extension portion a21 extending from one end of the second front surface electrode 222a arranged on a front surface of the second film portion 221, a second one end connection portion a22 extending from one end of the second back surface electrode 222b arranged on the back side of the second film portion 221, and a first connection extension portion a23 connecting the first one end extension portion a21 and the second one end extension portion a22 electrically.

Further, the second connection portion 227 may include a second other end connection portion 227b including a first other end extension portion b21 extending from the other end of the second front surface electrode 222a arranged on the front of the second film portion 221, a second other end extension portion b22 extending from the other end of the second back surface electrode 222b arranged on the back side of the second film portion, and a second connection extension portion b23 connecting the first other end extension portion b21 and the second other end extension portion b22 electrically.

The plurality of first front surface electrodes 212a and the plurality of first back surface electrodes 212b arranged on the first film portion 211 may be electrically connected by the first one end connection portion 217a and the first other end connection portion 217b. Accordingly, the first electrode forming the first front surface electrode 212a and the first back surface electrode 212b may be short-circuited.

Further, the plurality of second front surface electrodes 222a and the plurality of second back surface electrodes 222b arranged on the second film portion 221 may be electrically connected by the second one end connection portion 227a and the second other end connection portion 227b. Accordingly, the second electrode formed by the second front surface electrode 222a and the second back surface electrode 222b may be short-circuited.

That is, resistance components having the first electrode and the second electrode may be reduced, and the response speed with respect to touch may be increased by short-circuiting the plurality of first electrodes of the first pattern portion 210 and the plurality of second electrodes of the second pattern portion 220.

According to the exemplary embodiments, the first electrodes arranged on the both surfaces of the first film portion may be short-circuited and the second electrodes arranged on the both surfaces of the second film portion may be short-circuited by arranging the first electrode of the X axis on the both surfaces of the first film portion and arranging the second electrode of the Y axis on the both surfaces of the second film portion, and thus the resistance of the wire can be reduced.

The delay time of the signal detected can be reduced by reducing the resistance of the wire, and thus the response speed with respect to the touch of the display device can be increased.

As discussed, embodiments of the invention can provide a touch panel, comprising: a first pattern portion comprising a plurality of first electrodes spaced apart from each other and a first film portion, wherein each first electrode comprises two electrode portions on opposite surfaces of the first film portion that are electrically connected to each other; a second pattern portion comprising a plurality of second electrodes spaced apart from each other and a second film portion, wherein each second electrode comprises two electrode portions on opposite surfaces of the second film portion that are electrically connected to each other; and an insulating portion configured to insulate the first pattern portion and the second pattern portion.

In such embodiments, the connection between the two electrode portions of the first electrode (and that between the two electrode portions of the second electrode) can be considered to be a short circuit. The connection between the two electrode portions may be via one of more connection portions on side portions of the first film portion or may be via connection portion through the first film portion.

Although exemplary embodiments have been particularly shown and described above, it would be appreciated by those skilled in the art that various changes may be made therein without departing from the principles of the inventive concept, the scope of which is defined in the following claims.

## Claims

1. A touch panel, comprising:
a first pattern portion comprising a first film portion, and a first electrode portion in which a first electrode which is short-circuited is arranged on the first film portion and a plurality of first electrodes are spaced apart from each other;
a second pattern portion comprising a second film portion, and a second gap portion in which a second electrode which is short-circuited is arranged on the second film portion and a plurality of second electrodes are spaced apart from each other; and
an insulating portion configured to insulate the first pattern portion and the second pattern portion.

2. The touch panel of claim 1, wherein the plurality of first electrodes comprise a first one surface electrode arranged to be spaced apart from each other on one surface of the first film portion, and a first back surface electrode arranged to be spaced apart from each other on a back surface of the first film portion, and
the plurality of second electrodes comprise a second one surface electrode arranged to be spaced apart from each other on one surface of the second film portion, and a second back surface electrode arranged to be spaced apart from each other on a back surface of the second film portion.

3. The touch panel of claim 2, wherein the first pattern portion further comprises a first connection portion connecting the first one surface electrode and the first back surface electrode arranged at positions facing each other, and
the second pattern portion further comprises a second connection portion connecting the second one surface electrode and the second back surface electrode arranged at positions facing each other.

4. The touch panel of claim 3, wherein the first film portion comprises at least one first hole formed at an arrangement position of the first one surface electrode,
wherein the second film portion comprises at least one second hole arranged at an arrangement position of the second one surface electrode,
wherein the first connection portion is arranged in the at least one first hole, and wherein the second connection portion is arranged in the at least one second hole.

5. The touch panel of claim 3 or 4, wherein the first connection portion is arranged on each of a first side and a second side of the first film portion and connects the first one surface electrode and the first back surface electrode which are arranged to face each other, and
wherein the second connection portion is arranged on each of a first side and a second side of the second film portion and connects the second one surface electrode and the second back surface electrode which are arranged to face each other.

6. The touch panel of any one of claims 3 to 5, wherein the first connection portion connects a first extension portion extending from both ends of the first one surface electrode and a second extension portion extending from both ends of the first back surface electrode, and
the second connection portion connects a first extension portion extending from both ends of the second one surface electrode and a second extension portion extending from both ends of the second back surface electrode.

7. The touch panel of any one of claims 3 to 6, further comprising:
a first wire portion connected to the first electrode portion and configured to receive an input of a signal; and
a second wire portion connected to the second electrode portion and configured to output a signal.

8. The touch panel of any one of claims 1 to 7, wherein the insulating portion comprises an adhesive material.

9. The touch panel of any one of claims 1 to 8, wherein the plurality of first electrodes and the plurality of second electrodes intersect each other.

10. The touch panel of any one of claims 1 to 9, wherein the first film portion and the second film portion comprise glass or plastic.

11. A display device including:
a display panel configured to display an image; and
a touch panel arranged to be adjacent to the display panel, and configured to output a touch signal, wherein the touch panel is according to any one of claims 1 to 10.
